(19) Europäisches Patentamt
European Patent Office
Office européen des brevets

(11) EP 0 559 594 B1

(12) **FASCICULE DE BREVET EUROPEEN**

(45) Date de publication et mention de la délivrance du brevet:
**09.06.1999 Bulletin 1999/23**

(51) Int Cl.[6]: **G06T 7/60**

(21) Numéro de dépôt: **93460009.9**

(22) Date de dépôt: **22.02.1993**

(54) **Procédé de création de la signature d'un objet représenté sur une image numérique,du type consistant à définir au moins un calibre dimensionnel caractéristique dudit objet, et procédé correspondant de vérification de la signature d'un objet**

Verfahren zur Erzeugung des Kennzeichens eines auf einem numerischen Bild dargestellten Objektes mit Bestimmung mindestens einer charakteristischen Grösse dieses Objektes und zugehöriges Verfahren zur Prüfung des Objektkennzeichens

Process for creating the signature of an object represented on a digital image, from the type consisting in defining at least one caracteristic dimensional calibre of that object and corresponding process for verifying the signature of an object

(84) Etats contractants désignés:
**AT BE CH DE DK ES FR GB IE IT LI LU NL PT SE**

(30) Priorité: **24.02.1992 FR 9202263**

(43) Date de publication de la demande:
**08.09.1993 Bulletin 1993/36**

(73) Titulaire: **VISIONERF SARL**
**F-49300 Cholet (FR)**

(72) Inventeurs:
- **Souin, Dominique**
  **F-49800 Prelaze (FR)**
- **Robert, Pierre**
  **F-49300 Cholet (FR)**

(74) Mandataire: **Vidon, Patrice**
**Cabinet Patrice Vidon,**
**Immeuble Germanium,**
**80, Avenue des Buttes-de-Coesmes**
**35700 Rennes (FR)**

(56) Documents cités:
**US-A- 3 638 188**

- **COMPUTER GRAPHICS AND IMAGE PROCESSING vol. 11, no. 4, Décembre 1979, NEW YORK US pages 349 - 376 PER-ERIK DANIELSSON ET AL. 'distance checking algorithms'**
- **IEE PROCEEDINGS E. COMPUTERS & DIGITAL TECHNIQUES vol. 137, no. 4, Juillet 1990, STEVENAGE GB pages 319 - 327 , XP136869 Q.M. WU ET AL. 'Boundary segmentation for industrial inspection'**

EP 0 559 594 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

Le domaine de l'invention est celui de la vision artificielle appliquée à la reconnaissance de forme entendue au sens large.

Une application particulièrement adaptée à l'invention est le contrôle de qualité. Un "système qualité" tel que défini par les normes ISO 9000 doit permettre, par mesure sans contact, d'identifier et de préparer un enregistrement relatif par exemple à la qualité de fabrication d'un objet. Il s'agit de déterminer au moins un paramètre caractéristique de l'objet contrôlé, ce paramètre étant utilisé ensuite pour vérifier la conformité d'autres objets du même type. Les mesures étant effectuées sans contact, un objet contrôlé ne subit aucun dommage.

Plus précisément, l'invention concerne un procédé de création de la "signature" (constituée d'un ou plusieurs paramètres de contrôle) d'un objet représenté sur une image numérique décrite pixel par pixel, du type consistant à définir au moins un calibre dimensionnel caractéristique de l'image de cet objet.

L'invention concerne également un procédé correspondant de vérification de la signature d'un objet.

L'invention peut s'appliquer dans tous les cas où un système de prise de vue peut mémoriser, pour chaque objet à contrôler, une image contenant cet objet. Il peut s'agir, notamment, d'une caméra fixe située en regard d'un tapis roulant entraînant des objets issus d'une même chaîne de fabrication.

Les solutions connues de mise en oeuvre d'un tel système de vision artificielle appliquée au contrôle de qualité présentent de nombreux inconvénients.

En effet, un tel système est généralement très complexe et nécessite une grande quantité de matériels spécialisés. Cette complexité induit une implantation longue et coûteuse des matériels.

L'utilisation d'un tel système est donc obligatoirement liée à l'assistance d'un intervenant extérieur spécialiste, qui doit être présent non seulement lors de la phase de mise en place mais également lors de toutes les phases d'adaptation du système au contrôle d'un nouveau type d'objet.

A cette situation de dépendance du fournisseur, s'ajoute le surcoût des interventions et l'impossibilité de préserver une confidentialité satisfaisante sur le savoir-faire de l'utilisateur.

Par ailleurs, cette assistance d'un intervenant extérieur n'étant souvent que partielle, un opérateur doit assurer le suivi et le fonctionnement du système. Cet opérateur, utilisateur habituel du système, se trouve confronté à un système très peu convivial, complexe et donc difficile à intégrer.

Les procédés connus de contrôle d'objets ont généralement visé à simplifier et économiser les opérations de traitement du signal mises en oeuvre. Ainsi, on trouve généralement la succession des étapes suivantes :

- sur une console affichant une image contenant un objet type, un opérateur pose une ligne de jauge horizontale et une ligne de jauge verticale permettant de repérer la position de l'objet dans l'image.
- en fonctionnement, le système mémorise une image contenant un objet à contrôler puis évalue un décalage éventuel par rapport aux lignes de jauge posées auparavant. L'objet est alors recalé dans l'image en fonction de ce décalage.
- enfin, le système effectue des mesures relativement succinctes (à partir de quelques lignes de jauge, ou d'un comptage de points ou d'objets (groupes de points) sur les deux images contenant respectivement l'objet type et l'objet à contrôler recalé. A partir de ces mesures, le système apprécie la qualité de l'objet à contrôler et prend une décision quant à sa conformité avec l'objet type, en fonction de tolérances définies a priori par l'opérateur.

Un tel système est notamment très dépendant du moindre décalage de l'une quelconque des lignes de jauge utilisées pour le recalage ou les mesures dimensionnelles. En effet, si l'image de l'un des objets présente par exemple un léger défaut dans une zone où est posée une ligne de jauge, les opérations de recalage ou de mesure dimensionnelle seront erronées.

En outre, dans les systèmes existants, le procédé de contrôle comprend également fréquemment une étape de binarisation des pixels composant l'image numérique contenant l'objet. Une telle binarisation consiste à donner une première valeur de luminance à tous les pixels dont la luminance est inférieure à un seuil de luminance, les pixels de luminance supérieure à ce seuil prenant une seconde valeur de luminance. Cette étape de binarisation s'applique aussi bien à l'objet type qu'à l'objet à contrôler et a pour but de ne conserver que les contours de l'objet. Or, suivant l'éclairage, l'objet apparaît plus ou moins clairement vis-à-vis du reste de l'image. Si l'objet ne se distingue pas nettement, l'étape de binarisation risque de détruire une partie de l'information, ce qui se traduit par une perte partielle ou totale des contours de l'objet.

En plus de l'imperfection du principe de repérage d'objet à deux lignes de jauge et de la vulnérabilité aux variations d'éclairage, les systèmes existants présentent de nombreux autres défauts tels que la sensibilité aux bruits dans l'image, ou encore le fait que les systèmes existants travaillent généralement sur l'image point à point. Dans une telle image, tous les points sont obligatoirement définis. Or, si les valeurs des pixels correspondant à certains points de l'image sont erronées, les calculs de distance ou de repérage prenant en compte ces valeurs sont faux.

L'invention a notamment pour objectif de pallier ces différents inconvénients de l'état de la technique.

Plus précisément, un objectif de l'invention est de fournir un procédé de création de la signature d'un objet, du type consistant à définir au moins un calibre dimensionnel caractéristique de l'objet.

L'invention a également pour objectif de fournir un tel procédé permettant une réduction importante des délais et des coûts d'implantation d'un système mettant en oeuvre ce procédé.

Un autre objectif de l'invention est de fournir un tel procédé facile à mettre en oeuvre, simple d'utilisation et ne nécessitant aucune intervention extérieure, permettant ainsi à l'utilisateur de ce procédé de le mettre en oeuvre de façon autonome.

Un autre objectif de l'invention est de fournir un tel procédé permettant d'améliorer le repérage d'un objet dans une image.

L'invention a également pour objectif de fournir un tel procédé permettant de réduire la vulnérabilité des mesures aux variations d'éclairage, et la sensibilité aux "bruits" dans l'image.

L'invention a également pour objectif de fournir un tel procédé permettant de pallier les inconvénients dus à l'aspect discrétisé et "pointilliste" de l'image.

L'invention a également pour objectif de fournir un procédé de vérification de la signature d'un objet à contrôler.

Ces objectifs, ainsi que d'autres qui apparaîtront par la suite, sont atteints selon l'invention à l'aide du procédé défini à la revendication 1.

Ainsi, la tâche d'un opérateur est simplifiée. En effet, à l'aide d'un écran de visualisation, l'opérateur se contente d'une part de placer deux fenêtres de recherche de façon que chacune de ces fenêtres contienne une portion de contour, et d'autre part d'indiquer la nature géométrique de chacune des portions de contour. Ces deux étapes peuvent s'effectuer, par exemple, avec un stylet optique ou avec un écran tactile. De cette façon, l'opérateur n'a pas à connaître un langage de programmation spécifique. Cette facilité de dialogue entre le système et l'opérateur limite également l'assistance par des intervenants extérieurs. Ainsi, la modification du type d'objet à contrôler peut être facilement effectuée par l'opérateur de façon autonome et aussi souvent que cela est nécessaire.

Le coût d'utilisation du système n'est pas augmenté. En effet, après installation, le système peut être utilisé par un personnel interne ne possédant aucune formation spécifique à la vision artificielle appliquée au contrôle de qualité.

Enfin, l'absence d'intervenant extérieur permet de conserver la confidentialité du savoir-faire du fabricant.

Par ailleurs, en extrayant, pour chacune des fenêtres de recherche,une portion de contour mathématiquement la plus probable à partir des pixels contenus dans la fenêtre, on s'affranchit des risques engendrés par la présence de pixels erronés. En effet, même si le contour n'est ni continu, ni exactement de la nature géométrique recherchée, le système extrait un contour calculé continu et de nature géométrique correspondant exactement à l'information de contour fournie par l'opérateur au système.

Avantageusement, ledit procédé comprend une étape préalable de transformation mathématique de ladite image numérique, ladite image numérique subissant :

- d'une part une première et une seconde transformations mathématiques correspondant à l'application d'un opérateur de dérivée première par rapport à un axe horizontal et un axe vertical respectivement, lesdites première et seconde transformations délivrant deux dérivées premières de l'image numérique par rapport audit axe horizontal et audit axe vertical respectivement, et
- d'autre part une troisième transformation mathématique correspondant à l'application d'un opérateur Laplacien à deux dimensions, ladite troisième transformation délivrant une dérivée seconde de l'image numérique.

Ainsi, on dispose de deux dérivées premières et d'une dérivée seconde de l'image numérique.

Les contours apparaissent beaucoup plus clairement puisque seules les variations des valeurs des pixels sont conservées.

De façon avantageuse, ladite dérivée seconde de ladite image numérique est visualisée pour constituer un masque d'aide à l'utilisateur pour fournir au système lesdites fenêtres de recherche et lesdites informations de contour correspondantes.

En effet, la dérivée seconde d'une image extrait les contours de l'image de base, et peut être obtenue en une seule opération de convolution appliquée sur l'image de base ce qui permet une visualisation en dynamique, à temps et coût de traitement réduits. Cette visualisation en dynamique des contours de l'image est notamment utile pour effectuer manuellement le réglage de l'éclairage de l'objet à contrôler.

En revanche, l'image obtenue en dérivée seconde ne permet pas d'obtenir aisément une information de la pente des contours de l'objet dans le plan de l'image, en chaque point, information directement utile pour les traitements ultérieurs de recalcul des contours. Cette information est au contraire directement disponible à partir des deux dérivées premières de l'image, puisqu'il suffit de lire pour chaque point la valeur qu'il prend dans l'image dérivée en x, et dans celle dérivée en y, et d'en faire le rapport pour connaître la pente associée à ce point.

Avantageusement, ladite nature géométrique d'une portion de contour calculée appartient au groupe comprenant :

- les cercles;
- les coins;
- les portions de droite.

Ainsi, un tel procédé ne fait appel qu'à des notions intuitives. Quel que soit la forme de l'objet, la combinaison de deux de ces trois natures géométriques de portions de contour permet toujours de définir une distance caractéristique de cet objet.
De façon avantageuse, ladite nature géométrique de la première portion de contour calculée est un cercle ou un coin, celle de la seconde portion de contour calculée étant un cercle ou un coin ou une portion de droite.
Dans un mode de réalisation préférentiel de l'invention, ladite étape de fourniture audit système de deux fenêtres de recherche est suivie, pour chacune desdites fenêtres, des deux étapes suivantes :

- détermination d'un seuil de niveau d'amplitude des pixels contenus dans ladite fenêtre ;
- extraction de pixels de portion de contour apparent, ladite étape d'extraction consistant à éliminer les pixels dont le niveau d'amplitude est inférieur audit seuil et à conserver les pixels dont le niveau d'amplitude est supérieur audit seuil, lesdits pixels conservés constituant lesdits pixels de portion de contour apparents.

Ainsi, après ces deux étapes, le système dispose d'une pluralité de pixels de portion de contour apparent. En d'autres termes, le système dispose d'une information précise sur la portion de contour apparent à travers un nombre limité de pixels. Par conséquent, le rapport signal/bruit dans l'image est augmenté et la qualité est améliorée.
De plus, le nombre de pixels à traiter étant réduit, le temps de traitement est également réduit.
Enfin, le seuil n'étant pas figé a priori, l'appareil peut l'ajuster a posteriori pour tenir compte des dispersions et des variations d'éclairage et du contraste sur l'objet.
On prend avantageusement l'une des définitions suivantes dudit niveau d'amplitude d'un pixel :

- ledit niveau d'amplitude d'un pixel est défini comme la valeur associée audit pixel dans la dérivée seconde de l'image numérique;
- ledit niveau d'amplitude d'un pixel est défini comme la somme des valeurs absolues des valeurs associées audit pixel dans les deux dérivées premières de l'image ;
- ledit niveau d'amplitude d'un pixel est défini comme la racine carrée de la somme des carrés des valeurs associées audit pixel dans les deux dérivées premières de l'image.

Dans un mode de réalisation préférentiel de l'invention, ladite étape d'extraction de pixels de portion de contour apparent n'est effectuée que sur certaines lignes et certaines colonnes de ladite image numérique ayant subi au moins une desdites transformations mathématiques, les pixels de portion de contour apparent extraits constituant une portion de contour échantillonnée.
Ceci correspond à une opération d'échantillonnage et permet de réduire encore les temps de traitements.
Selon une variante, lesdites étapes de détermination d'un seuil et d'extraction de pixels de portion de contour apparent sont effectuées :

- d'une part sur certaines lignes de pixels de la dérivée première par rapport à l'axe horizontal de l'image numérique, le niveau d'amplitude d'un pixel étant alors défini comme la valeur associée audit pixel dans ladite dérivée première par rapport à l'axe horizontal de l'image numérique, des premiers pixels de portion de contour apparent étant extraits ;
- d'autre part sur certaines colonnes de pixels de la dérivée première par rapport à l'axe vertical de l'image numérique, le niveau d'amplitude d'un pixel étant alors défini comme la valeur associée audit pixel dans la dérivée première par rapport à l'axe vertical de l'image numérique, des seconds pixels de portion de contour apparent étant extraits,

l'ensemble desdits premiers et seconds pixels de portion de contour apparent extraits constituant une portion de contour apparent échantillonnée.
De cette façon, on détermine une portion de contour apparent échantillonnée tout en s'affranchissant du problème généralement rencontré lors d'un tel échantillonnage, à savoir la favorisation (du point de vue du nombre de pixels) des portions horizontales de contour placées le long d'une colonne d'image échantillonnée, ou des portions verticales de contour placées le long d'une ligne d'image échantillonnée.

En effet, selon ce mode de réalisation préférentiel, la dérivée première par rapport à x (respectivement y) de l'image ne contient aucune information horizontale (respectivement verticale) de contour et peut donc être échantillonnée selon plusieurs rangées horizontales (respectivement plusieurs colonnes verticales) sans risque de cumul de pixels de portion de contour dans une même zone.

Avantageusement, lesdites lignes et lesdites colonnes d'image sont sensiblement équidistantes.

De cette façon, les pixels de portion de contour sont sensiblement équidistants, ce qui facilite les traitements ultérieurs.

De façon préférentielle, ladite étape d'extraction d'une portion de contour théorique met en oeuvre une transformée de Hough.

De cette façon, même s'il manque des points sur un contour ou si ces points ne sont pas disposés parfaitement suivant une courbe de nature géométrique définie, le système extrait une portion de contour qui, par contre, est de nature géométrique définie.

De façon avantageuse, ladite distance séparant deux portions de contour calculées appartient au groupe comprenant :

- la distance la plus courte entre un point caractéristique de ladite première portion de contour calculée et un point caractéristique de ladite seconde portion de contour calculée;
- la distance la plus courte entre un point caractéristique de ladite première portion de contour calculée et une droite caractéristique de ladite seconde portion de contour calculée.

Préférentiellement, ledit point caractéristique est le centre d'un cercle ou le point d'intersection des deux droites incluant chacune une des deux demi-droites formant un coin.

L'invention concerne également un procédé de vérification de la signature d'un objet à contrôler représenté sur une image numérique de travail, ladite signature étant comparée à une signature originale créée à l'aide d'un procédé de création de signature tel que décrit précédemment.
caractérisé en ce que d'une part ledit procédé de création de ladite signature originale comprend une étape supplémentaire de repérage par ledit système de la position d'un objet type dans une image numérique de référence,
et en ce que d'autre part ledit procédé de vérification comprend les étapes suivantes :

- ledit système repère la position dudit objet à contrôler dans ladite image numérique de travail, et calcule le décalage avec ladite position dudit objet type dans ladite image numérique de référence,
- ledit système décale automatiquement lesdites fenêtres de recherche de façon qu'elles contiennent des portions de contour dudit objet à contrôler de mêmes natures géométriques que celles fournies audit système lors de ladite création de la signature originale,
- ledit système, dans deux étapes identiques à celles dudit procédé de création de la signature originale, extrait pour chacune desdites fenêtres de recherche une portion de contour et calcule la distance séparant lesdites portions de contour théorique,
- ledit système compare enfin ladite distance correspondant à la signature de l'objet à contrôler à ladite distance correspondant à la signature originale, ladite comparaison permettant d'apprécier la qualité dudit objet à contrôler.

Avantageusement, ladite étape de repérage de la position d'un objet dans une image numérique consiste :

- à fournir au système au moins une fenêtre de repérage découpée dans ladite image numérique et contenant au moins une portion caractéristique de contour apparent dudit objet ;
- à déterminer pour chaque fenêtre de repérage au moins une information de position de ladite portion caractéristique de contour apparent dudit objet dans ladite fenêtre de repérage.

La fenêtre possède une taille inférieure ou égale à la taille de l'image numérique.

Selon un premier mode de réalisation préférentiel de l'invention, on fournit au système au moins une fenêtre de repérage vertical et/ou au moins une fenêtre de repérage horizontal, le système déterminant au moins une information de position verticale dans ladite fenêtre de repérage vertical et/ou au moins une information de position horizontale dans ladite fenêtre de repérage horizontal, chacune desdites informations de position verticale :

* identifiant une ligne d'écran de ladite fenêtre de repérage vertical correspondant à une extrémité verticale de ladite portion caractéristique de contour apparent dudit objet, et
* précisant par quel bord de ladite fenêtre de repérage vertical doit commencer ladite identification de ladite ligne d'écran ;

chacune desdites informations de position horizontale :

* indiquant, pour au moins deux lignes, une distance entre d'une part un bord latéral de ladite fenêtre de repérage horizontal contenant une portion de contour et d'autre part la partie la plus proche de ladite portion caractéristique de contour de l'objet, l'ensemble desdites distances donnant une information sur le profil de ladite portion caractéristique de contour, et
* précisant par rapport à quel bord de ladite fenêtre de repérage horizontal sont calculées lesdites distances.

Ainsi, la recherche de la position verticale de la portion de contour de l'objet dans la fenêtre de repérage vertical s'arrête dès que le système trouve une ligne où apparaît l'objet. Le système ne traite donc que partiellement l'image ce qui permet d'utiliser au mieux la puissance de traitement.

Par ailleurs, la précision d'un bord, dans chacune des informations de position horizontale et verticale, permet d'optimiser les traitements correspondants.

Selon un second mode de réalisation préférentiel de l'invention, ladite fourniture au système d'au moins une fenêtre de repérage est suivie, pour chaque fenêtre de repérage, d'une étape d'extraction de pixels de portion de contour d'objet consistant à :

- détecter un premier pixel de portion de contour d'objet en analysant successivement les pixels d'une portion rectiligne d'un chemin de recherche,
- détecter un second pixel de portion de contour d'objet en analysant successivement et selon un sens de rotation prédéterminé, les pixels d'une première portion circulaire dudit chemin de recherche, ladite première portion circulaire correspondant à une partie du périmètre d'un cercle de rayon égal à un rayon prédéterminé et centré sur ledit premier pixel de portion de contour d'objet,
- détecter un nouveau pixel de portion de contour d'objet en analysant successivement, à partir du pixel de portion de contour d'objet précédant le précédent pixel de portion de contour d'objet et selon ledit sens de rotation prédéterminé, les pixels d'une nouvelle portion circulaire dudit chemin de recherche, ladite nouvelle portion circulaire correspondant à une partie du périmètre d'un cercle de rayon égal audit rayon prédéterminé et centré sur le pixel de portion de contour d'objet précédent,

  ladite détection d'un nouveau pixel de portion de contour d'objet étant réitérée :

  - soit jusqu'à ce que la distance entre ledit nouveau pixel de portion de contour d'objet et ledit premier pixel de contour d'objet soit inférieure à la longueur dudit rayon prédéterminé,
  - soit jusqu'à ce que ledit nouveau pixel de portion de contour d'objet soit situé hors de ladite fenêtre de repérage,

et pour chaque fenêtre, le système déterminant, à partir desdits pixels de portion de contour d'objet, au moins une information de position de ladite portion caractéristique de contour d'objet, ladite information de position appartenant au groupe comprenant :

* les informations de position horizontale,
* les informations de position verticale,
* les informations d'orientation angulaire.

Avantageusement, ladite étape d'extraction de pixels de portion de contour d'objet est suivie d'une étape d'obtention d'un nombre prédéterminé N de pixels de travail équidistants à partir desdits pixels de portion de contour d'objet, ladite étape d'obtention d'un nombre prédéterminé N de pixels de travail équidistants consistant à :

- construire un polygone en reliant lesdits pixels de portion de contour d'objet;
- calculer le périmètre L dudit polygone ;
- calculer la distance D entre deux pixels de travail successifs telle que lesdits pixels de travail soient sensiblement équidistants : $D = L/N$ ;
- générer lesdits pixels de travail équidistants par interpolation linéaire entre lesdits pixels de portion de contour d'objet, lesdits pixels de travail équidistants définissant un contour de travail, la distance D entre deux pixels de travail équidistants étant définie le long dudit contour de travail.

Dans un mode de réalisation avantageux de l'invention, ladite fenêtre de repérage contient entièrement le contour dudit objet et ladite information de position angulaire est définie comme l'angle compris entre l'axe horizontal de l'image et l'axe principal dudit objet, ledit axe principal passant par le centre dudit objet,
et lesdites informations de position horizontale et verticale correspondent aux coordonnées horizontale et verticale du

centre dudit objet.

Préférentiellement, ledit angle est calculé :

- soit selon la formule suivante :

  où θ est ledit angle ;

$$\theta = 1/2\,ARCTG\frac{2.(\sum_{i=1}^{N} x_i.y_i - N.c_x.c_y)}{\sum_{i=1}^{N} x_i^2 - \sum_{i=1}^{N} y_i^2 - N.(c_x^2 - c_y^2)}$$

  $(x_i, y_i)$ sont les coordonnées du $i^{ème}$ pixel de contour d'objet,
  N est le nombre de pixels de contour d'objet,
  $(c_x, c_y)$ sont les coordonnées dudit centre de l'objet calculées selon les formules suivantes :

$$c_x = 1/N\sum_{i=1}^{N} x_i$$

$$c_y = 1/N\sum_{i=1}^{N} y_i$$

- soit en définissant ledit axe principal comme l'axe passant par ledit centre de l'objet ainsi que par le pixel de contour d'objet le plus éloigné dudit centre de l'objet, les coordonnées (Cx, Cy) du centre de l'objet étant calculées selon les formules suivantes :

$$c_x = 1/N\sum_{i=1}^{N} x_i$$

$$c_y = 1/N\sum_{i=1}^{N} y_i$$

Selon une variante du mode de réalisation préférentiel, on associe, à chacun desdits pixels de portion de contour d'objet, le segment de portion de contour d'objet reliant ledit pixel de portion de contour d'objet et le pixel suivant de portion de contour d'objet, chacun desdits segments étant défini par sa position angulaire par rapport au segment précédent, et ledit système calculant la valeur maximale d'une fonction de corrélation entre d'une part les positions angulaires des segments de la portion de contour d'objet à contrôler et d'autre part les positions angulaires des segments de position de contour d'objet type, ladite valeur maximale fournissant une information de décalage, en nombre de segments, entre un segment de la portion de contour d'objet à contrôler et le segment correspondant de la portion de contour d'objet type, ladite information de décalage permettant le calcul:

- d'une part d'une information de décalage en translation entre la position de l'objet à contrôler et la position de l'objet type en translation, ladite information de décalage étant calculée comme la différence entre les coordonnées

d'un segment de la portion de contour d'objet à contrôler et les coordonnées du segment correspondant de la portion de contour d'objet type ;

- d'autre part d'une information de décalage en rotation entre la position d'un objet à contrôler et la position de l'objet type, ladite information de décalage en rotation étant calculée comme la différence entre la position angulaire absolue d'un segment de portion de contour d'objet à contrôler et la position angulaire absolue du segment correspondant de la portion de contour d'objet type.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente une vue d'un système de vision artificielle appliquée au contrôle de qualité ;
- la figure 2A présente un schéma synoptique d'un procédé de création de la signature d'un objet ou de vérification de la signature d'un objet à contrôler ;
- la figure 2B présente un schéma synoptique d'une variante du procédé présenté sur la figure 2A ;
- les figures 3a et 3b présentent une étape du procédé tel que présenté sur les figures 2A et 2B, les figures 3a et 3b correspondant respectivement à la détermination de la position verticale et à la détermination de la position horizontale d'un objet dans une image ;
- chacune des figures 4, 5 et 6 présente un exemple de calcul d'une distance séparant une première portion de contour calculée d'une seconde portion de contour calculée ;
- la figure 7 présente un exemple de détermination de pixels de portion de contour apparent ;
- la figure 8 présente un second exemple de détermination de pixels équidistants de contour d'objet.

La description suivante correspond à un système de vision artificielle appliquée au contrôle de qualité. Un tel système permet de créer la signature d'un objet, c'est-à-dire de déterminer au moins un paramètre caractéristique de cet objet. Par ailleurs, un tel système permet de vérifier la conformité d'autres objets du même type en utilisant comme référence la caractéristique déterminée auparavant. En d'autres termes, le système compare la signature de l'objet à contrôler à la signature originale.

La figure 1 présente une vue d'un tel système de vision artificielle appliquée au contrôle de qualité.

Lors de la création de la signature d'un objet, l'objet étant une poupée dans cet exemple, le système détermine la distance entre les deux pieds d'une poupée. Ensuite, le système doit contrôler la distance entre les deux pieds de toutes les poupées du même type.

Une caméra 1 fixe est située en regard d'un tapis roulant 2 entraînant des poupées $3_1$, $3_2$, $3_3$, $3_4$. Cette caméra 1 est reliée à un système 4 de traitement qui mémorise, pour chaque poupée $3_1$, $3_2$, $3_3$, $3_4$, une image numérique décrite pixel par pixel contenant la poupée.

Le système 4 de traitement détermine, sur chaque image numérique, la distance caractéristique de l'objet (la distance entre les deux pieds d'une poupée dans cet exemple) et la compare à la distance caractéristique choisie comme valeur de référence lors de la création de la signature.

D'une part, les résultats sont imprimés (5) en continu. Ainsi, le système 4 de traitement permet de préparer un enregistrement relatif à la qualité de fabrication d'un objet.

D'autre part, grâce à des sorties application (non représentées), le système 4 peut commander en temps réel des unités (non représentées) de traitement des non-conformités.

La figure 2A présente un schéma synoptique d'un procédé de création de la signature d'un objet ou de vérification de la signature d'un objet à contrôler. Les différentes étapes successives de traitement du signal mises en oeuvre dans un tel procédé sont généralement les suivantes :

- mémorisation (21) d'une image numérique contenant un objet ;
- transformation mathématique (22) de l'image mémorisée ;
- filtrage (23, 24) des dérivées premières et seconde de l'image obtenues par transformation mathématique ;
- visualisation (25) de la dérivée seconde de l'image ;
- repérage (26) de la position de l'objet dans l'image à l'aide des deux dérivées premières de cette image ;
- fourniture de deux fenêtres (27) de recherche contenant chacune une portion de contour ;
- fourniture de la nature géométrique (28) de la portion de contour contenue dans chaque fenêtre de recherche ;
- détermination (29) d'un seuil dans chaque fenêtre ;
- élimination (210) du bruit dans l'image par extraction de pixels de portion de contour apparent, en fonction de ce seuil ;
- extraction (211) d'une portion de contour théorique dans chaque fenêtre ;
- calcul (212) de la distance séparant les deux portions de contour théoriques.

Les étapes de fourniture des fenêtres de recherche et de fourniture des natures des portions de contours contenues dans les fenêtres sont réalisées par un opérateur lors de la création de la signature d'un objet, puis de façon automatique par le système lors de la vérification de la signature d'un objet à contrôler.

La première étape est la mémorisation (21) d'une image numérique contenant un objet. Afin de déterminer un calibre dimensionnel caractéristique d'un objet, le système de traitement de l'image doit travailler sur une image numérique décrite pixel par pixel et contenant l'objet. Une telle image numérique peut être obtenue, par exemple, grâce à un capteur vidéo matriciel de type CCD suivi d'un convertisseur analogique/numérique. Le système mémorise cette image numérique de façon à pouvoir l'utiliser lors des différentes étapes ultérieures de traitement.

L'étape suivante est une étape de transformation mathématique (22) de l'image numérique. En fait, l'image numérique 213 subit trois transformations mathématiques donnant respectivement deux dérivées premières 215A et 215B et une dérivée seconde 214 de cette image numérique. Ces transformations sont réalisées par des processeurs de traitement d'image.

Dans un système de vision artificielle appliquée au contrôle de qualité, on s'intéresse essentiellement aux contours des objets. Par contour, on entend non seulement les bords périphériques d'un objet mais encore des éventuels bords intérieurs ou encore toute autre courbe ou fraction de courbe remarquable de l'objet visualisé. Par conséquent, ces opérations de dérivée première et de dérivée seconde sont parfaitement adaptées à un tel système puisqu'elles permettent de ne conserver que les variations des valeurs de luminance des pixels composant l'image. Ainsi, les contours de l'objet représenté sur l'image apparaissent beaucoup plus clairement.

Chacune de ces trois images dérivées est ensuite filtrée (23, 24). Ce filtrage permet de réduire le bruit venant s'ajouter aux informations utiles des deux images dérivées. Ce filtrage est par exemple de type gaussien.

Les étapes de transformation mathématique (22) et de filtrage (23, 24) sont exécutées sur des matrices (5 x 5) correspondant à des morceaux d'image numérique.

L'opération de dérivée seconde, correspond à l'application d'un opérateur Laplacien. L'ensemble constituée de l'application d'un opérateur Laplacien suivie d'une étape de filtrage peut s'écrire sous la forme d'un produit de convolution :

$$[I_1] = [I] * [L]$$

où :

- $[I_1]$ est une matrice (5 x 5) correspondant à un morceau de la dérivée seconde de l'image après filtrage (image "Laplacienne" filtrée) 216;
- [I] est une matrice (5 x 5) correspondant à un morceau de l'image numérique 213 ;
- [L] est une matrice (5 x 5) d'application d'un opérateur Laplacien (dérivée seconde) suivie d'un filtrage gaussien.

Cette matrice [L] est par exemple :

[L] = [[0, 30, 48, 30, 0]
[30, -24, -54, -24, 30]
[48, -54, -120, -54, 48]
[30, -24, -54, -24, 30]
[0, 30, 48, 30, 0]]

L'image "Laplacienne" filtrée 216 offre une image réaliste. Elle peut donc être visualisée (25) sur un moniteur afin de constituer un masque d'aide. Grâce à cette visualisation, l'opérateur, à l'aide d'un stylet optique ou avec un écran tactile, effectue des choix ou fournit des renseignements lors de certaines des étapes suivantes.

Par ailleurs, l'image numérique 213 mémorisée lors de la première étape, subit deux dérivées premières respectivement par rapport à un axe horizontal et un axe vertical. Chacune des deux dérivées premières de l'image 215A et 215B ainsi obtenue est ensuite filtrée (26). Ces deux opérations de dérivée première suivies d'une étape de filtrage peuvent s'écrire sous la forme de deux produits de convolution :

$$[I_{dx}] = [I] * [D_x]$$

et

$$[Id_y] = [I] * [D_y]$$

où :

$[I_{dx}]$ est une matrice (5 x 5) correspondant à un morceau de la dérivée première par rapport à un axe horizontal de l'image (et après filtrage) $217_A$ ;

$[Id_y]$ est une matrice (5 x 5) correspondant à un morceau de la dérivée première par rapport à un axe vertical de l'image (et après filtrage) $217_B$.

[I] est une matrice (5 x 5) correspondant à un morceau de l'image numérique 213 ;

$[D_x]$ est une matrice (5 x 5) d'application d'un opérateur de dérivée première par rapport à un axe horizontal suivi d'un filtrage gaussien ;

$[D_y]$ est une matrice (5 x 5) d'application d'un opérateur de dérivée première par rapport à un axe vertical suivi d'un filtrage gaussien ;

Les matrices $[D_x]$ et $[D_y]$ sont par exemple:

$[D_x]$ = [[2, -127, 0, 127, -2]
[10, -77, 0, 77, -10]
[16, -127, 0, 127, -16]
[10, -77, 0, 77, -10]
[2, -17, 0, 17, -2]

$[D_y]$ = [[2, -10, -16, -10, 2]
[-17, -77, -127, -77, -17]
[0, 0, 0, 0, 0]
[17, 77, 127, 77, 17]
[-2, -10, -16, -10, -2]]

Les dérivées premières de l'image $217_A$ et $217_B$ sont peu sensibles aux bruits. Elles sont donc utilisées dans toutes les étapes suivantes du procédé.

L'étape suivante de repérage (26) de la position de l'objet dans l'image utilise ces dérivées premières de l'image filtrée $217_A$ et $217_B$.

Le repérage de la position d'un objet dans une image lors de la création de la signature de l'objet d'une part, et lors de la vérification de la signature d'un objet à contrôler d'autre part, permet au système de déterminer le décalage entre la position de l'objet dans le premier cas et la position de l'objet à contrôler dans le second cas.

Selon un premier mode de réalisation, présenté en relation avec les figures 3a et 3b, le repérage de la position d'un objet dans une image consiste à définir successivement une information de position verticale et une information de position horizontale à partir de mesures effectuées soit sur des pixels de l'image de base, soit sur des pixels des images dérivées.

Chacune des figures 3a et 3b présente une fenêtre de repérage 31, 35 découpée dans l'image numérique et contenant un objet 32.

Dans certains cas, la fenêtre de repérage peut ne contenir qu'une portion de contour de l'objet.

L'information de position verticale de l'objet 32 (ou de la portion de contour de l'objet) comprend d'une part la ligne $l_n$ d'écran correspondant à une extrémité verticale de l'objet 32 (ou de la portion de contour de l'objet) et d'autre part le bord 33 de la fenêtre de repérage vertical par lequel doit démarrer la recherche de cette ligne d'écran.

Ainsi, sur la figure 3a, l'extrémité supérieure de l'objet 32 est située sur la $n^{ème}$ ligne $l_n$ d'écran (première partie de l'information) et la recherche doit commencer par le bord supérieur 33 (seconde partie de l'information).

La recherche de la position verticale d'un objet (ou de la portion de contour de l'objet) démarre par le bord indiqué (le bord supérieur dans cet exemple) et s'arrête dès qu'une extrémité verticale de l'objet (ou de la portion de contour de l'objet) est présente sur une ligne d'écran. Cette ligne d'écran permet de connaître le décalage vertical entre la position de l'objet type lors de la création de la signature et la position d'un objet à contrôler lors du contrôle.

Le système ne traite donc que la portion de fenêtre contenant l'objet ce qui permet de minimiser les besoins en puissance de calcul et les temps de traitement.

L'information de position horizontale de l'objet 32 (ou de la portion de contour de l'objet) est constituée d'une part de plusieurs distances $d_1$ à $d_m$ et d'autre part du bord 34 de la fenêtre de repérage horizontal 35 par rapport auquel sont mesurées les distances. Avantageusement, le nombre des mesures de distance effectués est par exemple compris entre cinq et dix de façon à pouvoir tolérer que certaines mesures qui seraient erronées à cause des défauts d'image, et dont le caractère erroné aurait été détecté par comparaison avec le profil appris, soient éliminées. Ainsi, si on réalise

cinq mesures de position horizontale, on pourra tolérer d'éliminer par exemple jusqu'à deux mesures erronées, le recalage horizontal étant calculé à partir des trois mesures conservées.

Sur une ligne d'écran, chaque distance mesurée correspond à l'écart entre un bord de la fenêtre de repérage horizontal 35 et le contour le plus proche de l'objet.

Ainsi, sur la figure 3b, les distances $d_1$ à $d_m$ sont mesurées par rapport au bord latéral gauche et indiquent le profil de l'objet 32.

La recherche de la position horizontale d'un objet (ou de la portion de contour de l'objet), lors de son contrôle, consiste donc à retrouver son profil en testant les mêmes lignes d'écran que celles correspondant aux distances $d_1$ à $d_m$ mesurées lors de la création de la signature. Quand ce profil est retrouvé, le système peut déterminer le décalage horizontal entre la position de l'objet lors de la création de la signature et lors du contrôle.

Selon un second mode de réalisation, après que l'opérateur a fourni une fenêtre de repérage, le système extrait dans cette fenêtre des pixels équidistants de contour d'objet Ces pixels équidistants, dont le nombre est ramené à un nombre fixe N, sont ensuite utilisés pour calculer des informations de position horizontale et verticale et une information d'orientation angulaire.

Comme présenté sur la figure 8, la détection d'une portion de contour d'objet 81 dans une fenêtre de repérage consiste successivement à :

- détecter un premier pixel 82 de portion de contour d'objet en analysant successivement les pixels (c'est-à-dire en comparant successivement le niveau d'amplitude de ces pixels avec le seuil de niveau d'amplitude) d'une portion rectiligne 83 du chemin de recherche,
- détecter un second pixel 84 de portion de contour d'objet en analysant successivement, selon un sens de rotation 85 prédéterminé, les pixels d'une première portion circulaire 86 du chemin de recherche, cette première portion circulaire 86 correspondant à une partie du périmètre d'un cercle de rayon r (longueur prédéterminée) et centré sur le premier pixel 82,
- détecter un troisième pixel 87 de portion de contour d'objet en analysant successivement, selon le sens de rotation 85 prédéterminé, les pixels d'une seconde portion circulaire 88 du chemin de recherche, cette seconde portion circulaire 88 correspondant à une partie du périmètre d'un cercle de rayon r et centré sur le second pixel 84,
- réitérer l'opération précédente:
  - soit jusqu'à ce que la distance entre un nouveau pixel de portion de contour d'objet et le premier pixel 82 soit inférieure à la longueur prédéterminée r ;
  - soit jusqu'à ce qu'un nouveau pixel de portion de contour d'objet soit situé hors de la fenêtre de repérage.

Ainsi, le chemin de recherche est constitué d'une portion rectiligne 83 et d'une pluralité de portion circulaires 86, 88, 89, 810, 811 (arcs de cercles).

Les pixels 82, 84, 87, 812, 813, 814 de portion de contour d'objet sont équidistants (deux pixels successifs sont espacés d'une distance r) et constituent une portion de contour d'objet échantillonnée.

Ensuite, on passe d'un nombre quelconque à un nombre fixe N de pixels de portion de contour d'objet, les N pixels étant appelés pixels de travail dans la suite de la description.

Cette opération consiste à :

- construire un polygone en reliant lesdits pixels de portion de contour ;
- calculer le périmètre L de ce polygone ;
- calculer la distance D entre deux pixels de travail successif (D = L/N) telle que les pixels de travail soient équidistants ;
- générer les pixels de travail par interpolation linéaire entre les pixels de portion de contour d'objet.

La suite de la description de l'étape de repérage de la position d'un objet dans une image concerne deux cas distincts selon que la fenêtre de repérage contient une portion ou l'ensemble d'un contour d'objet.

Dans le premier cas, à savoir le cas où la fenêtre de repérage contient l'ensemble du contour d'objet, on définit :

- d'une part des informations de position horizontale et verticale de l'objet comme étant égales aux coordonnées horizontale et verticale du centre de l'objet, et
- d'autre part une information de position angulaire comme étant égale à l'angle compris entre l'axe horizontal de l'image et l'axe principal du contour d'objet, cet axe principal passant par le centre de l'objet.

Les coordonnées ($c_x$, $c_y$) du centre du contour d'objet sont données par les relations :

$$c_x = 1/N \sum_{i=1}^{N} x_i$$

$$c_y = 1/N \sum_{i=1}^{N} y_i$$

où ($x_i$, $y_i$) sont les coordonnées du $i^{ème}$ pixel de contour d'objet.

L'angle d'orientation θ est par exemple calculé selon la formule suivante:

$$\theta = 1/2\,ARCTG \frac{2.(\sum_{i=1}^{N} x_i.y_i - N.c_x.c_y)}{\sum_{i=1}^{N} x_i^2 - \sum_{i=1}^{N} y_i^2 - N.(c_x^2 - c_y^2)}$$

Selon une variante, l'angle d'orientation est calculé en définissant l'axe principal comme l'axe passant par le centre du contour d'objet ainsi que par le pixel de contour d'objet le plus éloigné de ce centre.

Dans le second cas, à savoir le cas où la fenêtre de repérage ne contient qu'une portion de contour d'objet, on associe à chaque pixel de portion de contour un segment de portion de contour d'objet, ce segment reliant ce pixel de portion de contour au pixel de portion de contour suivant. Par ailleurs, ce segment comprend un nombre prédéterminé de pixels et est défini par sa position angulaire par rapport au segment précédent.

Le système calcule la valeur maximale d'une fonction de corrélation entre d'une part les positions angulaires des segments de la portion de contour d'objet à contrôler et d'autre part les positions angulaires des segments de portion de contour d'objet type.

Cette valeur maximale fournit une information de décalage (en nombre de segments) permettant de savoir quel segment de la portion de contour d'objet type correspond à un segment prédéterminé de la portion de contour d'objet à contrôler.

A partir de cette information de décalage, le système calcule :

- d'une part une information de décalage en translation, et
- d'autre part une information de décalage en rotation.

L'information de décalage en translation est calculée comme la différence entre les coordonnées d'un segment de la portion de contour d'objet à contrôler et les coordonnées du segment correspondant de la portion de contour d'objet type.

L'information de décalage en rotation est calculée comme la différence de position angulaire absolue d'un segment de portion de contour d'objet à contrôler et la position angulaire absolue du segment correspondant de la portion de contour d'objet type.

On peut par exemple prendre l'axe horizontal de l'image comme référence des mesures angulaires absolues.

L'étape qui suit cette étape de détermination (26) de la position de l'objet dans l'image est la fourniture de deux fenêtres (27) de recherche contenant chacune une portion de contour de cet objet. La distance caractéristique de l'objet est en effet la distance séparant ces deux portions de contour.

Lors de la création de la signature, grâce à la visualisation (25) de la dérivée seconde de l'image contenant l'objet, un opérateur place sur l'image deux fenêtres de recherche de façon que chacune de ces fenêtres contienne une portion de contour de l'objet.

Par contre, lors de la vérification de la signature d'un objet à contrôler, le système place automatiquement, et grâce aux indications de position de l'objet dans l'image déterminées dans l'étape précédente, les deux fenêtres de recherche. Ces deux fenêtres sont placées de façon à contenir les mêmes portions de contour que celles contenues dans les fenêtres placées par l'opérateur lors de la création de la signature de l'objet.

Les figures 4, 5 et 6 présentent chacune une image 43, 53, 63 contenant un objet 44, 54, 64. Sur chaque image, un opérateur a posé successivement une première 41, 51, 61 et une seconde fenêtre de recherche 42, 52, 62.
Après avoir fourni au système les deux fenêtres de recherche contenant chacune une portion de contour de l'objet, l'opérateur indique à ce même système la nature géométrique de chacune de ces portions de contour (28). Lors de la vérification de la signature d'un objet à contrôler, le système prendra automatiquement (28) les mêmes natures géométriques de portions de contours. Les natures géométriques des premières et secondes portions de contour contenues dans les fenêtres correspondant aux figures 4, 5 et 6 sont respectivement :

- un cercle 45 (caractérisé par les coordonnées de son centre) et un coin 46;
- deux coins 55, 56 ;
- un coin 65 et une portion de droite 66.

Ainsi, l'opérateur dispose de trois types de natures géométriques de portions de contour: cercle, coin et portion de droite. La nature géométrique de la portion de contour contenue dans la première fenêtre de recherche 41, 51, 61 est soit un cercle 45, soit un coin 55, 65. La nature géométrique de la portion de contour contenue dans la seconde fenêtre de recherche 42, 52, 62 est un cercle (il n'y a pas d'exemple correspondant représenté sur les figures), un coin 46 et 56, ou une portion de droite 66.
Par la suite, le système ne travaille pas avec la totalité des pixels d'une image mais seulement avec les pixels des deux fenêtres de recherche découpées dans cette image.
D'autres types de mesure peuvent être mis en oeuvre dans le cadre de l'invention. Ainsi, par exemple, une autre mesure peut consister à rechercher l'intersection d'un contour sur une ligne de jauge tirée entre d'une part un point caractéristique (centre de cercle, coin, ...) et d'autre part un point choisi plus ou moins arbitrairement dans une autre fenêtre (par exemple le centre de la fenêtre). Dans tous les cas, la fiabilité de la mesure réalisée résulte du fait que les contours de l'image ont été recalculés, et qu'on a donc minimisé les risques de mesures erronées qui seraient dus à des défauts dans l'image.
On notera en outre que la forme et la dimension des fenêtres positionnées par l'opération peut être adaptée à la nature géométrique du contour correspondant, ou à tout autre critère (par exemple le bruit de l'image dans l'environnement du contour. Les fenêtres peuvent ainsi être quadrangulaires, circulaires, elliptiques, polygonales, etc...
Les deux étapes suivantes du procédé selon l'invention sont complémentaires. En effet, dans chaque fenêtre, le système détermine un seuil (29) de niveau d'amplitude, puis on extrait (210) des pixels de portion de contour apparent en fonction de ce seuil.
Le niveau d'amplitude d'un pixel peut être défini de plusieurs façons, et notamment :

- comme la valeur associée à ce pixel dans la dérivée seconde de l'image numérique ;
- ou comme la somme des valeurs absolues associées à ce pixel dans les deux dérivées premières de l'image ;
- ou encore comme la racine carrée de la somme des carrés des valeurs associées à ce pixel dans les deux dérivées premières de l'image.

On entend ici par pixel le plus petit élément homogène d'une image. Ainsi, un même pixel, de coordonnées fixes, prend des valeurs de niveau d'amplitude différentes selon l'image prise en compte (dérivée première de l'image numérique par rapport à l'axe horizontal (ou vertical), dérivée seconde de l'image numérique).
Dans chaque fenêtre, un seuil est donc déterminé en fonction des niveaux d'amplitude des pixels contenus dans cette fenêtre.
L'étape d'extraction (210) de pixels de portion de contour apparent consiste à ne conserver que les pixels dont le niveau d'amplitude est supérieur à ce seuil. Ainsi, le seuil n'est pas prédéterminé mais au contraire, tient compte de toute modification éventuelle des conditions de mémorisation d'une image numérique. Par exemple, si l'éclairage augmente entre la création de la signature d'un objet et le contrôle d'un objet, le seuil correspondant au premier cas sera plus faible que celui correspondant au second cas. De cette façon, l'étape de seuillage (extraction (210) de pixels de portion de contour), n'entraîne aucune perte d'information concernant la portion de contour contenue dans la fenêtre correspondante.
Afin de limiter les temps de traitement, seuls les pixels appartenant à un nombre limité de lignes et de colonnes équidistantes sont analysés.
Ceci revient à échantillonner les pixels pris en compte, la portion de contour apparent obtenue étant également échantillonnée.
A ce stade du procédé, le système possède donc, pour chacune des deux fenêtres de recherche découpée dans une image, deux éléments de travail, à savoir:

- une portion de contour apparent échantillonnée (issue du seuillage des pixels) ;

- une information fournie par l'opérateur, définissant la nature géométrique de cette portion de contour.

Il existe d'autres modes de réalisation de ces deux étapes de détermination de seuil et de seuillage.
Selon une variante présentée en relation avec les figures 2A et 7, pour chacune des fenêtres, les deux dérivées premières de l'image sont traitées séparément.
Sur l'exemple présenté sur la figure 7, l'objet contenu dans l'image 72 est un disque 71.
A partir de la dérivée première par rapport à l'axe horizontal de l'image numérique 73 :

- on détermine ($29_A$) un premier seuil de niveau d'amplitude, le niveau d'amplitude d'un pixel étant défini comme la valeur associée à ce pixel dans la dérivée première par rapport à l'axe horizontal de l'image,
- on analyse ($210_A$) les pixels de certaines lignes équidistantes $l_1$ à $l_n$ en comparant le niveau d'amplitude de ces pixels avec le premier seuil : seuls les pixels dont le niveau d'amplitude est supérieur à ce premier seuil sont conservés et constituent les premiers pixels 74 de portion de contour apparent.

L'ensemble 77 des premiers et seconds pixels de portion de contour apparent constitue une portion de contour apparent échantillonnée.
Dans l'étape suivante (211), le système, à l'aide de ces deux éléments, extrait une portion de contour théorique mathématiquement la plus probable et d'une nature géométrique correspondant à l'information de contour fournie au système par l'opérateur.
Cette extraction (211) peut être réalisée notamment grâce à la mise en oeuvre d'une transformée de Hough. Une telle transformée s'appuie sur la dualité existant entre chaque point appartenant à une courbe et les paramètres de cette courbe. En effet, les pixels constituant le contour issu de l'étape de seuillage (210) (et des étapes suivantes) ne forment pas un contour parfait. Dans certains cas, ce contour obtenu peut même être discontinu (par exemple lorsque le contour est échantillonné) et ne correspond exactement à aucune des trois natures géométriques proposées (cercle, coin, portion de droite). Or, le calcul de la distance caractéristique d'un objet (lors de la création de la signature comme lors du contrôle d'un objet) doit toujours être fait à partir de portions de contours identiques et correspondant parfaitement à l'une des trois natures géométriques proposées.
En d'autres termes, l'étape d'extraction (211) d'une portion de contour théorique dans chacune des fenêtres correspond à l'obtention d'une image vectorisée. La définition séparée de chaque pixel (image point à point) est remplacée par la définition de chaque élément représenté sur l'image par un vecteur (image vectorisée). Ainsi, un ensemble de points répartis sensiblement en forme de cercle est défini, lors de cette étape (211), par un "vecteur cercle" comprenant la valeur du rayon et les coordonnées du centre de ce cercle.
La dernière étape est le calcul (212) de la distance séparant deux portions de contour théoriques.
Il existe deux cas de calcul de distance :

- le calcul de la distance la plus courte entre d'une part un premier point caractéristique d'une première portion de contour et d'autre part un second point caractéristique d'une seconde portion de contour ;
- le calcul de la distance la plus courte entre d'une part un point caractéristique d'une première portion de contour et d'autre part une droite caractéristique d'une seconde portion de contour.

Lorsqu'une portion de contour théorique est un cercle ou un coin, le point caractéristique correspondant est respectivement le centre de ce cercle ou le point d'intersection des deux droites incluant chacune une des deux demi-droites formant ce coin.
Lorsqu'une portion de contour théorique est une portion de droite, la droite caractéristique correspondante est la droite incluant cette portion de droite.
Ainsi les figures 4 et 5 correspondent au premier cas de calcul de distance (point/point), la figure 6 correspondant au second cas (point/droite).
La distance caractéristique de l'objet 44 représenté sur l'image 43 de la figure 4 est la distance la plus courte entre :

- d'une part, le centre 47 du cercle 45 contenu dans la première fenêtre de recherche 41, et
- d'autre part, l'intersection des deux droites 49, 410 incluant chacune une des deux demi-droites formant le coin 46 contenu dans la seconde fenêtre de recherche 42.

La distance caractéristique de l'objet 54 représenté sur l'image 53 de la figure 5 est la distance la plus courte entre :

- d'une part, le point 57 d'intersection des deux droites 59, 510 incluant chacune une des deux demi-droites formant

le coin 55 contenu dans la première fenêtre de recherche 51, et

- d'autre part, le point 58 d'intersection des deux droites 511, 512 incluant chacune une des deux demi-droites formant le coin 56 contenu dans la seconde fenêtre de recherche 52.

La distance caractéristique de l'objet 64 représenté sur l'image 63 de la figure 6 est la distance la plus courte entre :

- d'une part, le point 67 d'intersection des deux droites 610, 611 incluant chacune une des deux demi-droites formant le coin 65 contenu dans la première fenêtre de recherche 61, et
- d'autre part, la droite 69 incluant la portion de droite 66 contenue dans la seconde fenêtre de recherche 62.

Dans ce dernier cas, la distance la plus courte est donc la distance entre:

- un point 68 qui est le point d'intersection de la droite 69 caractéristique de la portion de droite 66 contenue dans la seconde fenêtre d'une part, et de la perpendiculaire à cette droite passant par le point 67 caractéristique du coin contenu dans la première fenêtre d'autre part, et
- le point 67 défini auparavant.

Dans le cas où une distance est à mesurer entre deux portions de droites sensiblement parallèles (écart angulaire faible inférieur à une valeur prédéterminée, par exemple cinq degrés), la distance mesurée est par exemple la distance la plus courte entre le point milieu de la portion de droite inscrite dans une première des deux fenêtres de mesure, et la droite calculée dans la seconde fenêtre de mesure.

Lors de la création de la signature d'un objet, le système détermine une première distance (caractéristique de l'objet). Lors de la vérification de la signature d'un objet à contrôler, le système détermine une seconde distance et la compare à la première (cette étape n'est pas représentée sur la figure 2 car elle ne concerne que le procédé de vérification de la signature d'un objet).

Si l'écart entre les deux distances est inférieur à un écart toléré prédéterminé par l'opérateur, l'objet à contrôler possède la qualité de fabrication requise.

Dans le cas contraire, la mauvaise qualité de l'objet à contrôler est détectée et le système, par l'intermédiaire de sorties application (non représentées), peut commander en temps réel des unités (non représentées) de traitement des non-conformités (éjection ou tri des pièces non conformes, par exemple).

La description ci-dessus correspond à un procédé de création de la signature d'un objet et au procédé correspondant de vérification de la signature d'un objet. Ces deux procédés sont mis en oeuvre dans un système de vision artificielle appliquée au contrôle de qualité. Il est clair que ce procédé peut être aisément adapté à de nombreuses autres applications, sans sortir du cadre de l'invention.

De même, d'autres modes de mise en oeuvre du procédé selon l'invention peuvent être envisagés. On peut notamment prévoir de nouvelles natures géométriques de portions de contour (ellipse, par exemple).

## Revendications

1. Procédé de création de la signature d'un objet (32 ; 44 ; 54 ; 64) représenté sur une image numérique (31 ; 43 ; 53 ; 63) décrite pixel par pixel, du type consistant à définir au moins un calibre dimensionnel caractéristique dudit objet constitué par une mesure de distance entre deux points du contour caractéristique dudit objet, ladite mesure étant effectuée au moyen d'un système automatique de calcul,
caractérisé en ce qu'il comprend les étapes suivantes :

    - on fournit (27) audit système une première fenêtre de recherche (41; 51 ; 61) découpée dans ladite image numérique et contenant une première portion de contour apparent (45 ; 55 ; 65) dudit objet et une seconde fenêtre (42 ; 52 ; 62) de recherche découpée dans ladite image numérique et contenant une seconde portion de contour apparent (46 ; 56 ; 66) dudit objet;
    - on fournit (28) audit système une première information définissant la nature géométrique de ladite portion de contour contenue dans ladite première fenêtre (41 ; 51 ; 61) de recherche et une seconde information définissant la nature géométrique de ladite portion de contour contenue dans ladite seconde fenêtre de recherche (42 ; 52 ; 62) ;
    - ledit système extrait (211) automatiquement, pour chacune desdites fenêtres de recherche et à partir des pixels contenus dans ladite fenêtre, une portion de contour théorique mathématiquement la plus probable et d'une nature géométrique correspondant à ladite information de contour fournie audit système pour la fenêtre

correspondante;

- ledit système calcule (212) enfin la distance séparant ladite première portion de contour calculée de ladite seconde portion de contour calculée.

2. Procédé selon la revendication 1, caractérisé en ce qu'il comprend une étape préalable de transformation mathématique (22) de ladite image numérique, ladite image numérique subissant :

   - d'une part une première et une seconde transformations mathématiques correspondant à l'application d'un opérateur de dérivée première par rapport à un axe horizontal et un axe vertical respectivement, lesdites première et seconde transformations délivrant deux dérivées premières de l'image numérique par rapport audit axe horizontal et audit axe vertical respectivement, et
   - d'autre part une troisième transformation mathématique correspondant à l'application d'un opérateur Laplacien à deux dimensions, ladite troisième transformation délivrant une dérivée seconde de l'image numérique.

3. Procédé selon la revendication 2, caractérisé en ce que ladite dérivée seconde de ladite image numérique est visualisée (25) pour constituer un masque d'aide à l'utilisateur pour fournir au système lesdites fenêtres de recherche (41, 42 ; 51, 52 ; 61, 62) et lesdites informations de contour correspondantes.

4. Procédé selon l'une quelconque des revendications 1 à 3, caractérisé en ce que ladite nature géométrique d'une portion de contour calculée appartient au groupe comprenant :

   - les cercles;
   - les coins;
   - les portions de droite.

5. Procédé selon l'une quelconque des revendications 1 à 4, caractérisé en ce que ladite étape de fourniture (27) audit système de deux fenêtres de recherche est suivie, pour chacune desdites fenêtres, des deux étapes suivantes :

   - détermination (29) d'un seuil de niveau d'amplitude des pixels contenus dans ladite fenêtre (41, 42 ; 51, 52 ; 61, 62) ;
   - extraction (210) de pixels de portion de contour apparent, ladite étape (210) d'extraction consistant à éliminer les pixels dont le niveau d'amplitude est inférieur audit seuil et à conserver les pixels dont le niveau d'amplitude est supérieur audit seuil, lesdits pixels conservés constituant lesdits pixels de portion de contour apparents.

6. Procédé selon la revendication 5, caractérisé en ce que ledit niveau d'amplitude d'un pixel est défini comme la valeur associée audit pixel dans la dérivée seconde de l'image numérique.

7. Procédé selon la revendication 5, caractérisé en ce que ledit niveau d'amplitude d'un pixel est défini comme la somme des valeurs absolues des valeurs associées audit pixel dans les deux dérivées premières de l'image.

8. Procédé selon la revendication 5, caractérisé en ce que ledit niveau d'amplitude d'un pixel est défini comme la racine carrée de la somme des carrés des valeurs associées audit pixel dans les deux dérivées premières de l'image.

9. Procédé selon l'une quelconque des revendications 5 à 8, caractérisé en ce que ladite étape d'extraction (210) de pixels de portion de contour apparent n'est effectuée que sur certaines lignes et certaines colonnes de ladite image numérique ayant subi au moins une desdites transformations mathématiques, les pixels de portion de contour apparent extraits constituant une portion de contour échantillonnée.

10. Procédé selon la revendication 5, caractérisé en ce que lesdites étapes de détermination (29) d'un seuil et d'extraction (210) de pixels de portion de contour apparent sont effectuées :

   - d'une part sur certaines lignes de pixels de la dérivée première par rapport à l'axe horizontal de l'image numérique, le niveau d'amplitude d'un pixel étant alors défini comme la valeur associée audit pixel dans ladite dérivée première par rapport à l'axe horizontal de l'image numérique, des premiers pixels de portion de contour apparent étant extraits ;
   - d'autre part sur certaines colonnes de pixels de la dérivée seconde de la dérivée première par rapport à l'axe

vertical de l'image numérique, le niveau d'amplitude d'un pixel étant alors défini comme la valeur associée audit pixel dans la dérivée première par rapport à l'axe vertical de l'image numérique, des seconds pixels de portion contour apparent étant extraits,

l'ensemble desdits premiers et seconds pixels de portion de contour apparent extraits constituant une portion contour apparent échantillonnée.

**11.** Procédé selon l'une quelconque des revendications 9 et 10, caractérisé en ce que lesdites lignes et lesdites colonnes d'image sont sensiblement équidistantes.

**12.** Procédé selon l'une quelconque des revendications 1 à 11, caractérisé en ce que ladite étape (211) d'extraction d'une portion de contour théorique met en oeuvre une transformée de Hough.

**13.** Procédé selon l'une quelconque des revendications 1 à 12, caractérisé en ce que ladite distance séparant deux portions de contour calculées appartient au groupe comprenant :

- la distance la plus courte entre un point (47 ; 57) caractéristique de ladite première portion de contour calculée et un point (48 ; 58) caractéristique de ladite seconde portion de contour calculée;
- la distance la plus courte entre un point (67) caractéristique de ladite première portion de contour calculée et une droite (69) caractéristique de ladite seconde portion de contour calculée.

**14.** Procédé selon la revendication 3, caractérisé en ce que ledit point caractéristique est le centre (47) d'un cercle ou le point (48 ; 57, 58 ; 67) d'intersection des deux droites incluant chacune une des deux demi-droites (49, 410 ; 59, 510, 511, 512 ; 610, 611) formant un coin.

**15.** Procédé de vérification de la signature d'un objet à contrôler représenté sur une image (31 ; 43 ; 53 ; 63) numérique de travail, ladite signature étant comparée à une signature originale créée à l'aide d'un procédé selon l'une quelconque des revendications 1 à 14,
caractérisé en ce que d'une part ledit procédé de création de ladite signature originale comprend une étape supplémentaire (26) de repérage par ledit système de la position d'un objet type dans une image numérique de référence,
et en ce que d'autre part ledit procédé de vérification comprend les étapes suivantes :

- ledit système repère (26) la position dudit objet à contrôler dans ladite image numérique de travail, et calcule le décalage avec ladite position dudit objet type dans ladite image numérique de référence,
- ledit système décale automatiquement lesdites fenêtres de recherche (41, 42 ; 51, 52 ; 61, 62) de façon qu'elles contiennent des portions de contour dudit objet à contrôler de mêmes natures géométriques que celles fournies audit système lors de ladite création de la signature originale,
- ledit système, dans deux étapes identiques à celles dudit procédé de création de la signature originale, extrait pour chacune desdites fenêtres de recherche une portion de contour et calcule la distance séparant lesdites portions de contour théorique,
- ledit système compare enfin ladite distance correspondant à la signature de l'objet à contrôler à ladite distance correspondant à la signature originale, ladite comparaison permettant d'apprécier la qualité dudit objet à contrôler.

**16.** Procédé selon la revendication 15, caractérisé en ce que ladite étape (26) de repérage de la position d'un objet dans une image numérique consiste :

- à fournir au système au moins une fenêtre de repérage découpée dans ladite image numérique et contenant au moins une portion caractéristique de contour apparent dudit objet ;
- à déterminer pour chaque fenêtre de repérage au moins une information de position de ladite portion caractéristique de contour apparent dudit objet dans ladite fenêtre de repérage.

**17.** Procédé selon la revendication 16, caractérisé en ce qu'on fournit au système au moins une fenêtre de repérage vertical et/ou au moins une fenêtre de repérage horizontal,
et en ce que le système détermine au moins une information de position verticale dans ladite fenêtre de repérage vertical et/ou au moins une information de position horizontale dans ladite fenêtre de repérage horizontal,
chacune desdites informations de position verticale :

* identifiant une ligne ($l_n$) d'écran de ladite fenêtre de repérage vertical (31) correspondant à une extrémité verticale de ladite portion caractéristique de contour apparent dudit objet (32), et
* précisant par quel bord (33) de ladite fenêtre de repérage vertical (31) doit commencer ladite identification de ladite ligne d'écran ($l_n$);

chacune desdites informations de position horizontale :

* indiquant, pour au moins deux lignes, une distance ($d_1$ à $d_m$) entre d'une part un bord latéral (34) de ladite fenêtre de repérage horizontal (35) contenant une portion de contour et d'autre part la partie la plus proche de ladite portion caractéristique de contour de l'objet (32), l'ensemble desdites distances ($d_1$ à $d_m$) donnant une information sur le profil de ladite portion caractéristique de contour, et
* précisant par rapport à quel bord (34) de ladite fenêtre de repérage horizontal (35) sont calculées lesdites distances.

**18.** Procédé selon la revendication 16, caractérisé en ce que ladite fourniture au système d'au moins une fenêtre de repérage est suivie, pour chaque fenêtre de repérage, d'une étape d'extraction de pixels de portion de contour d'objet consistant à :

- détecter un premier pixel de portion de contour d'objet en analysant successivement les pixels d'une portion rectiligne d'un chemin de recherche,
- détecter un second pixel de portion de contour d'objet en analysant successivement et selon un sens de rotation prédéterminé, les pixels d'une première portion circulaire dudit chemin de recherche, ladite première portion circulaire correspondant à une partie du périmètre d'un cercle de rayon égal à un rayon prédéterminé et centré sur ledit premier pixel de portion de contour d'objet,
- détecter un nouveau pixel de portion de contour d'objet en analysant successivement, à partir du pixel de portion de contour d'objet précédant le précédent pixel de portion de contour d'objet et selon ledit sens de rotation prédéterminé, les pixels d'une nouvelle portion circulaire dudit chemin de recherche, ladite nouvelle portion circulaire correspondant à une partie du périmètre d'un cercle de rayon égal audit rayon prédéterminé et centré sur le pixel de portion de contour d'objet précédent,
  ladite détection d'un nouveau pixel de portion de contour d'objet étant réitérée :
  - soit jusqu'à ce que la distance entre ledit nouveau pixel de portion de contour d'objet et ledit premier pixel de contour d'objet soit inférieure à la longueur dudit rayon prédéterminé,
  - soit jusqu'à ce que ledit nouveau pixel de portion de contour d'objet soit situé hors de ladite fenêtre de repérage,

et en ce que, pour chaque fenêtre, le système détermine, à partir desdits pixels de portion de contour d'objet, au moins une information de position de ladite portion caractéristique de contour d'objet, ladite information de position appartenant au groupe comprenant :

* les informations de position horizontale,
* les informations de position verticale,
* les informations d'orientation angulaire.

**19.** Procédé selon la revendication 18, caractérisé en ce que ladite étape d'extraction de pixels de portion de contour d'objet est suivie d'une étape d'obtention d'un nombre prédéterminé N de pixels de travail équidistant à partir desdits pixels de portion de contour d'objet, ladite étape d'obtention d'un nombre prédéterminé N de pixels de travail équidistant consistant à :

- construire un polygone en reliant lesdits pixels de portion de contour d'objet;
- calculer le périmètre L dudit polygone ;
- calculer la distance D entre deux pixels de travail successifs telle que lesdits pixels de travail soient sensiblement équidistants : $D = L/N$ ;
- générer lesdits pixels de travail équidistants par interpolation linéaire entre lesdits pixels de portion de contour d'objet, lesdits pixels de travail équidistants définissant un contour de travail, la distance D entre deux pixels de travail équidistants étant définie le long dudit contour de travail.

**20.** Procédé selon une quelconque des revendications 18 et 19, caractérisé en ce que ladite fenêtre de repérage

contient entièrement le contour dudit objet, en ce que ladite information de position angulaire est définie comme l'angle compris entre l'axe horizontal de l'image et l'axe principal dudit objet, ledit axe principal passant par le centre dudit objet,
et en ce que lesdites informations de position horizontale et verticale correspondent aux coordonnées horizontale et verticale du centre dudit objet.

**21.** Procédé selon la revendication 20, caractérisé en ce que ledit angle est calculé selon la formule suivante :

$$\theta = 1/2\,ARCTG\frac{2.(\sum_{i=1}^{N} x_i.y_i - N.c_x.c_y)}{\sum_{i=1}^{N} x_i^2 - \sum_{i=1}^{N} y_i^2 - N.(c_x^2 - c_y^2)}$$

où $\theta$ est ledit angle ;

($x_i$, $y_i$) sont les coordonnées du $i^{ème}$ pixel de contour d'objet,
N est le nombre de pixels de contour d'objet,
($c_x$, $c_y$) sont les coordonnées dudit centre de l'objet calculées selon les formules suivantes :

$$c_x = 1/N\sum_{i=1}^{N} x_i$$

$$c_y = 1/N\sum_{i=1}^{N} y_i$$

**22.** Procédé selon la revendication 20, caractérisé en ce que ledit angle est calculé en définissant ledit axe principal comme l'axe passant par ledit centre de l'objet ainsi que par le pixel de contour d'objet le plus éloigné dudit centre de l'objet, les coordonnées (Cx, Cy) du centre de l'objet étant calculées selon les formules suivantes :

$$c_x = 1/N\sum_{i=1}^{N} x_i$$

$$c_y = 1/N\sum_{i=1}^{N} y_i$$

**23.** Procédé selon la revendication 19, caractérisé en ce qu'on associe, à chacun desdits pixels de portion de contour d'objet, le segment de portion de contour d'objet reliant ledit pixel de portion de contour d'objet et le pixel suivant de portion de contour d'objet, chacun desdits segments étant défini par sa position angulaire par rapport au segment précédent,

et en ce que ledit système calcule la valeur maximale d'une fonction de corrélation entre d'une part les positions angulaires des segments de la portion de contour d'objet à contrôler et d'autre part les positions angulaires des segments de position de contour d'objet type, ladite valeur maximale fournissant une information de décalage, en nombre de segments, entre un segment de la portion de contour d'objet à contrôler et le segment correspondant de la portion de contour d'objet type, ladite information de décalage permettant le calcul :

- d'une part d'une information de décalage en translation entre la position de l'objet à contrôler et la position de l'objet type en translation, ladite information de décalage étant calculée comme la différence entre les coordonnées d'un segment de la portion de contour d'objet à contrôler et les coordonnées du segment correspondant de la portion de contour d'objet type ;
- d'autre part d'une information de décalage en rotation entre la position d'un objet à contrôler et la position de l'objet type, ladite information de décalage en rotation étant calculée comme la différence entre la position angulaire absolue d'un segment de portion de contour d'objet à contrôler et la position angulaire absolue du segment correspondant de la portion de contour d'objet type.

**Patentansprüche**

**1.** Verfahren zum Erzeugen der Signatur eines Gegenstandes (32; 44; 54; 64), der auf einem digitalen Bild (31; 43; 53; 63) dargestellt ist und pixelweise beschrieben wird, wobei mindestens eine für den Gegenstand charakteristische Dimensionsgröße definiert wird, bestehend aus einem Entfernungsmaß zwischen zwei Punkten des charakteristischen Umrisses dieses Gegenstandes, wobei die entsprechende Messung mit Hilfe eines automatischen Berechnungssystems erfolgt, dadurch gekennzeichnet, daß es die folgenden Schritte umfaßt:

- dem System wird ein erstes Suchfenster (41; 51; 61) zugeordnet (27), das aus dem digitalen Bild ausgeschnitten ist und das einen ersten Teil eines scheinbaren Umrisses (45; 55; 65) des Objektes umfaßt sowie ein ebenfalls aus dem digitalen Bild ausgeschnittenes zweites Suchfenster (42; 52; 62), das einen zweiten Teil des sichtbaren Umrisses (46; 56; 66) umfaßt;
- dem System wird eine erste Information geliefert (28), welche die geometrische Natur des im ersten Suchfenster (41; 51; 61) enthaltenen Umrißteiles definiert und eine zweite Information, welche die geometrische Natur des im zweiten Suchfenster (42; 52; 62) enthaltenen Umrißteiles definiert;
- das System extrahiert (211) automatisch für jedes der Suchfenster, und ausgehend von den im Fenster enthaltenen Pixeln, einen theoretischen Umrißteil, der mathematisch am wahrscheinlichsten ist und dessen geometrische Natur der Umrißinformation entspricht, die dem System vom entsprechenden Fenster geliefert wird;
- anschließend berechnet (212) das System den Abstand zwischen dem ersten berechneten Umrißteil und dem zweiten berechneten Umrißteil.

**2.** Verfahren gemäß Anspruch 1,
dadurch gekennzeichnet, daß es einen vorausgehenden Schritt der mathematischen Transformation (22) des digitalen Bildes umfaßt, wobei das digitale Bild folgende Vorgänge unterläuft:

- einerseits eine erste und eine zweite mathematische Transformation, der Anwendung eines ersten Ableitungsoperators bezüglich einer horizontalen bzw. einer vertikalen Achse entsprechend, wobei die erste und zweite Transformation zwei erste Ableitungen des digitalen Bildes bezüglich der horizontalen Achse bzw. der vertikalen Achse liefert und
- andererseits eine dritte mathematische Transformation, der Anwendung eines zweidimensionalen Laplace-Operators entsprechend, die eine zweite Ableitung des digitalen Bildes liefert.

**3.** Verfahren gemäß Anspruch 2,
dadurch gekennzeichnet, daß die zweite Ableitung des digitalen Bildes sichtbar gemacht wird (25), um dem Benutzer eine Hilfsmaske bei der Lieferung der Suchfenster (41, 42; 51, 52; 61, 62) und der entsprechenden Umrißinformationen an das System bereitzustellen.

**4.** Verfahren gemäß einem der Ansprüche 1 bis 3,
dadurch gekennzeichnet, daß die geometrische Natur eines berechneten Umrißteiles der Gruppe angehört, die folgende Elemente umfaßt:

- Kreise;

- Ecken;
- Teile von Geraden.

**5.** Verfahren gemäß einem der Ansprüche 1 bis 4,
dadurch gekennzeichnet, daß auf dem Schritt zum Liefern (27) zweier Suchfenster an das System, für jedes Fenster die beiden nachstehenden Schritte folgen:

- Feststellung (29) eines Schwellenwertes für die Amplitudenhöhe der im Fenster (41, 42; 51, 52; 61, 62) enthaltenen Pixel;
- Extraktion (210) von Pixeln des scheinbaren Umrißteiles, wobei der Extraktionsschritt (210) im Eliminieren der Pixel besteht, deren Amplitudenhöhe unterhalb des Schwellenwertes liegt und im Aufrechterhalten der Pixel, deren Amplitudenhöhe oberhalb des Schwellenwertes liegt, wobei es sich bei den aufrechterhaltenen Pixeln um die Pixel des sichtbaren Umrißteiles handelt.

**6.** Verfahren gemäß Anspruch 5,
dadurch gekennzeichnet, daß die Amplitudenhöhe eines Pixels als der dem Pixel in der zweiten Ableitung des digitalen Bildes zugeordnete Wert definiert wird.

**7.** Verfahren gemäß Anspruch 5,
dadurch gekennzeichnet, daß die Amplitudenhöhe eines Pixels als die Summe der Absolutwerte der dem Pixel in den zwei ersten Ableitungen des Bildes zugeordnete Werte definiert wird.

**8.** Verfahren gemäß Anspruch 5,
dadurch gekennzeichnet, daß die Amplitudenhöhe eines Pixels als die Quadratwurzel der Summe der Quadrate der dem Pixel in den zwei ersten Ableitungen des Bildes zugeordnete Werte definiert wird.

**9.** Verfahren gemäß einem der Ansprüche 5 bis 8,
dadurch gekennzeichnet, daß der Extraktionsschritt (210) der Pixel des scheinbaren Umrißteiles nur über gewisse Zeilen und Spalten des digitalen Bildes erfolgt, das mindestens eine der mathematischen Transformationen durchlaufen hat, wobei die extrahierten Pixel des scheinbaren Umrißteiles einen abgetasteten scheinbaren Umrißteil darstellen.

**10.** Verfahren gemäß Anspruch 5,
dadurch gekennzeichnet, daß die Schritte zum Festlegen (29) eines Extraktionsschwellenwertes (210) von Pixeln des scheinbaren Umrißteiles folgendermaßen ausgeführt werden:

- einerseits über gewisse Pixelzeilen der ersten Ableitung bezüglich der horizontalen Achse des digitalen Bildes, wobei die Amplitudenhöhe eines Pixels als der Wert definiert wird, der dem Pixel in dieser ersten Ableitung bezüglich der horizontalen Achse des digitalen Bildes zugeordnet wird, wobei erste Pixel von scheinbaren Umrißteilen extrahiert werden;
- andererseits über gewisse Pixelspalten der zweiten Ableitung der ersten Ableitung bezüglich der vertikalen Achse des digitalen Bildes, wobei die Amplitudenhöhe eines Pixels als der Wert definiert wird, der dem Pixel in der ersten Ableitung bezüglich der vertikalen Achse des digitalen Bildes zugeordnet wird, wobei zweite Pixel von sichtbaren Umrißteilen extrahiert werden;

wobei die Gesamtheit der ersten und zweiten extrahierten Pixel sichtbarer Umrißteile einen abgetasteten sichtbaren Umrißteil darstellt.

**11.** Verfahren gemäß einem der Ansprüche 9 und 10,
dadurch gekennzeichnet, daß die Bildzeilen und -spalten in etwa die gleiche Entfernung untereinander aufweisen.

**12.** Verfahren gemäß einem der Ansprüche 1 bis 11,
dadurch gekennzeichnet, daß der Schritt zum Extrahieren (211) eines theoretischen Umrißteiles eine Hough-Transformierte anwendet.

**13.** Verfahren gemäß einem der Ansprüche 1 bis 12,
dadurch gekennzeichnet, daß die Entfernung zwischen zwei berechneten Umrißteilen der Gruppe angehört, die folgendes umfaßt:

- die kürzeste Entfernung zwischen einem charakteristischen Punkt (47; 57) des ersten berechneten Umrißteiles und einem charakteristischen Punkt (48; 58) des zweiten berechneten Umrißteiles;
- die kürzeste Entfernung zwischen einem charakteristischen Punkt (67) des ersten berechneten Umrißteiles und einer charakteristischen Geraden (69) des zweiten berechneten Umrißteiles.

**14.** Verfahren gemäß Anspruch 3,
dadurch gekennzeichnet, daß der charakteristische Punkt Mittelpunkt (47) eines Kreises oder Schnittpunkt (48; 57, 58; 67) zweier Geraden ist, die jeweils zwei Halbgeraden (49, 410; 59, 510, 511, 512; 610, 611) umfassen, die eine Ecke bilden.

**15.** Verfahren zum Prüfen der Signatur eines zu prüfenden Gegenstandes, der auf einem digitalen Arbeitsbild (31; 43; 53; 63) dargestellt ist, wobei die Signatur mit einer originalen Signatur verglichen wird, die nach einem Verfahren gemäß einem der Ansprüche 1 bis 14 erzeugt wird,
dadurch gekennzeichnet, daß einerseits das Verfahren zum Erzeugen der originalen Signatur einen zusätzlichen Markierungsschritt (26) der Position eines typischen Gegenstandes durch das System in einem digitalen Referenzbild umfaßt und,
daß andererseits das Prüfverfahren die folgenden Schritte umfaßt:

- das System ortet (26) die Position des zu prüfenden Gegenstandes im digitalen Arbeitsbild und berechnet die Verschiebung gegenüber dieser Position des typischen Gegenstandes im digitalen Referenzbild,
- das System verschiebt automatisch die Suchfenster (41, 42; 51, 52; 61, 62) derart, daß sie Umrißteile des zu prüfenden Gegenstandes umfassen, deren geometrische Natur die gleiche ist, wie diejenigen, die dem System beim Erzeugen der originalen Signatur verliehen werden,
- in zwei Schritten, die den Schritten des Verfahrens zum Erzeugen der originalen Signatur identisch sind, extrahiert das System für jedes der Suchfenster einen Teilumriß und berechnet die Entfernung zwischen diesen theoretischen Umrißteilen,
- anschließend vergleicht das System die der Signatur des zu prüfenden Gegenstandes entsprechende Entfernung mit der Entfernung, die der originalen Signatur entspricht, wobei dieser Vergleich eine Einschätzung der Qualität des zu prüfenden Gegenstandes ermöglicht.

**16.** Verfahren gemäß Anspruch 15,
dadurch gekennzeichnet, daß der Schritt (26) zum Orten der Position eines Gegenstandes in einem digitalen Bild folgendes umfaßt:

- Liefern von mindestens einem Ortungsfenster an das System, welches aus dem digitalen Bild ausgeschnitten ist, und mindestens einen charakteristischen sichtbaren Umrißteil des Gegenstandes umfaßt;
- für jedes Ortungsfenster wird mindestens eine Positionsangabe des charakteristischen sichtbaren Umrißteiles in dem Ortungsfenster festgelegt.

**17.** Verfahren gemäß Anspruch 16,
dadurch gekennzeichnet, das dem System mindestens ein vertikales Ortungsfenster und/oder mindestens ein horizontales Ortungsfenster geliefert wird und, daß das System mindestens eine Information der vertikalen Position im vertikalen Ortungsfenster und/oder mindestens eine Information der horizontalen Position im horizontalen Ortungsfehster festlegt,
wobei jede dieser Informationen zur vertikalen Position:

* eine Bildschirmzeile ($l_n$) des vertikalen Ortungsfensters (31) identifiziert, die einem vertikalen Ende des charakteristischen sichtbaren Umrißteiles des Gegenstandes (32) entspricht und
* genau festlegt, über welchen Rand (33) des vertikalen Ortungsfensters (31) die Erkennung der Bildschirmzeile ($l_n$) anfangen soll;

und wobei jede dieser Informationen zur horizontalen Position:

* für mindestens zwei Zeilen einen Abstand ($d_1$ bis $d_m$) zwischen einerseits einem Seitenrand (34) des horizontalen Ortungsfensters (35), das einen Umrißteil enthält, und andererseits dem nächstliegenden Teil des charakteristischen Umrißteiles des Gegenstandes (32) angibt, wobei die Gesamtheit dieser Abstände ($d_1$ bis $d_m$) eine Information zum Profil des charakteristischen Umrißteiles liefert, und
* festlegt, mit Bezug auf welchen Rand (34) des horizontalen Ortungsfensters (35) die Abstände berechnet

wurden.

**18.** Verfahren gemäß Anspruch 16,
dadurch gekennzeichnet, daß das Liefern von mindestens einem Ortungsfenster an das System für jedes Ortungsfenster von einem Schritt zum Extrahieren der Pixel von Umrißteilen des Gegenstandes gefolgt wird, welcher folgendes umfaßt:

- Erfassen eines ersten Pixels eines Umrißteils des Gegenstandes durch Analysieren der Pixel eines geraden Teiles eines Suchweges nacheinander,
- Erfassen eines zweiten Pixels eines Umrißteiles des Gegenstandes durch Analysieren, nacheinander und in vorgegebener Drehrichtung, der Pixel eines ersten kreisförmigen Teiles des Suchweges, wobei der erste kreisförmige Teil einem Teil des Umfanges eines Kreises entspricht, dessen Radius einen vorgegebenen Wert hat und dessen Mittelpunkt der erste Pixel eines Umrißteiles des Gegenstandes ist;
- Erfassen eines neuen Pixels eines Umrißteiles des Gegenstandes durch Analysieren, nacheinander und ausgehend von dem Pixel eines Umrißteiles des Gegenstandes, das vor dem vorausgehenden Pixel eines Umrißteiles des Gegenstandes liegt sowie in der vorgegebenen Drehrichtung, der Pixel eines neuen kreisförmigen Teiles des Suchweges, wobei der neue kreisförmige Teil einem Teil des Umfanges eines Kreises entspricht, dessen Radius den bereits vorgegebenen Wert hat und dessen Mittelpunkt das vorausgehende Pixel eines Umrißteiles des Gegenstandes ist,

wobei die Erfassung des neuen Pixel eines Umrißteiles des Gegenstandes wiederholt wird:

- entweder bis der Abstand zwischen den neuen Pixeln eines Umrißteiles des Gegenstandes und den ersten Pixeln des Gegenstandsumrisses kleiner ist als die Länge des vorgegebenen Radiuswertes,
- oder bis das neue Pixel eines Umrißteiles des Gegenstandes außerhalb des Ortungsfensters liegt,

ferner dadurch, daß das System für jedes Fenster, ausgehend von den Pixeln eines Umrißteiles des Gegenstandes, mindestens eine Angabe zur Position dieses charakteristischen Teils des Gegenstandsumrisses festlegt, wobei diese Positionsangabe der Gruppe angehört, die folgendes umfaßt:

* die horizontalen Positionsangaben,
* die vertikalen Positionsangaben,
* die Winkelorientierungsangaben.

**19.** Verfahren gemäß Anspruch 18,
dadurch gekennzeichnet, daß dem Schritt zum Extrahieren von Pixeln eines Umrißteiles des Gegenstandes ein Schritt zum Erhalten einer vorgegebenen Zahl N von Arbeitspixeln folgt, die, ausgehend vom Pixel eines Umrißteiles des Gegenstandes, alle den gleichen Abstand untereinander haben, wobei der Schritt zum Erhalten einer vorgegebenen Zahl N von Arbeitspixeln mit dem gleichen Abstand untereinander im folgenden besteht:

- Konstruktion eines Polygons durch Verbindungen der Pixel eines Umrißteiles des Gegenstandes;
- Berechnen des Umfanges L dieses Polygons;
- Berechnen des Abstandes D zwischen zwei aufeinanderfolgenden Arbeitspixeln, so daß diese Arbeitspixel in etwa untereinander den gleichen Abstand aufweisen:

$$D = L/N;$$

- Erzeugen dieser Arbeitspixel, die den gleiche Abstand untereinander aufweisen, durch lineare Interpolation zwischen den Pixeln eines Umrißteiles des Gegenstandes, wobei die den gleichen Abstand untereinander aufweisenden Arbeitspixel einen Arbeitsumriß definieren und wobei der Abstand D zwischen zwei den gleichen Abstand untereinander aufweisenden Arbeitspixel entlang dieses Arbeitsumrisses definiert wird.

**20.** Verfahren gemäß einem der Ansprüche 18 oder 19,
dadurch gekennzeichnet, daß der Gegenstandsumriß ganz im Ortungsfenster enthalten ist,
ferner daß die Winkelpositionsangabe als der Winkel definiert wird, der von der horizontalen Achse des Bildes und der Hauptachse des Gegenstandes gebildet wird, wobei die Hauptachse durch den Mittelpunkt des Gegenstandes läuft und,

daß die horizontalen und vertikalen Positionsangaben den horizontalen und vertikalen Koordinaten des Mittelpunktes des Gegenstandes entsprechen.

**21.** Verfahren gemäß Anspruch 20, dadurch gekennzeichnet, daß der Winkel nach der folgenden Formel berechnet wird:

$$\theta = 1/2\,ARCTG \frac{2.(\sum_{i=1}^{N} x_i.y_i - N.c_x.c_y)}{\sum_{i=1}^{N} x_i^2 - \sum_{i=1}^{N} y_i^2 - N.(c_x^2 - c_y^2)}$$

wobei θ der betrachtete Winkel ist;

($x_i$, $y_i$) die Koordinaten des i.ten Pixels des Gegenstandsumrisses sind,
N die Zahl der Pixel des Gegenstandsumrisses ist,
($c_x$, $c_y$) die Koordinaten des Mittelpunktes des Gegenstandes sind, nach den folgenden Formeln berechnet:

$$c_x = 1/N \sum_{i=1}^{N} x_i$$

$$c_y = 1/N \sum_{i=1}^{N} y_i$$

**22.** Verfahren gemäß Anspruch 20, dadurch gekennzeichnet, daß der Winkel bei Definition der Hauptachse als die durch den Mittelpunkt des Gegenstandes sowie durch den Pixel des Gegenstandsumrisses, der am weitesten vom Mittelpunkt des Gegenstandes entfernt ist, berechnet wird, wobei die Koordinaten ($C_x$, $C_y$) des Mittelpunktes des Gegenstandes nach den folgenden Formeln berechnet werden:

$$c_x = 1/N \sum_{i=1}^{N} x_i$$

$$c_y = 1/N \sum_{i=1}^{N} y_i$$

**23.** Verfahren gemäß Anspruch 19, dadurch gekennzeichnet, daß jedem der Pixel von Umrißteilen des Gegenstandes das Umrißteilsegment zugeordnet wird, das diesen Pixel eines Umrißteiles des Gegenstandes mit dem folgenden Pixel eines Umrißteiles des Gegenstandes verbindet, wobei jedes dieser Segmente durch seine Winkelposition im Verhältnis zum vorausgehenden Segment definiert wird und,
daß das System den Maximalwert einer Korrelationsfunktion zwischen einerseits den Winkelpositionen der Segmente eines Umrißteiles des zu prüfenden Gegenstandes und andererseits den Winkelpositionen der typischen Umrißpositionssegmente berechnet, wobei dieser Maximalwert eine Verschiebungsangabe nach Zahl der Segmente zwischen einem Segment des Umrißteiles des zu prüfenden Gegenstandes und das entsprechende Segment des Umrißteiles des Gegenstandes liefert, wobei diese Verschiebungsangabe die folgenden Berechnungen ermöglicht:

- einerseits einer linearen Verschiebungsangabe zwischen der Position des zu prüfenden Gegenstandes und der Position des typischen Objektes bei der Verschiebung, wobei die Verschiebungsangabe als die Differenz zwischen den Koordinaten eines Segmentes des zu prüfenden Umrißteiles des Gegenstandes und den Koordinaten des dem Umrißteil des typischen Gegenstandes entsprechenden Segmentes berechnet wird;
- andererseits eine Angabe der Drehverschiebung zwischen der Position eines zu prüfenden Gegenstandes und der Position des typischen Gegenstandes, wobei die Angabe der Drehverschiebung als die Differenz zwischen der absoluten Winkelposition eines Umrißteiles des zu prüfenden Gegenstandes und der absoluten Winkelposition des entsprechenden Segmentes des Umrißteiles des typischen Gegenstandes berechnet wird.

## Claims

**1.** Method for creation of the signature of an object (32; 44; 54; 64) represented on a digital image (31; 43; 53; 63) described pixel by pixel, of the type consisting in defining at least one characteristic dimensional parameter of the said object, comprising a measurement of the distance between two points on the characteristic contour of the said object, the said measurement being carried out by means of an automatic computation system, characterised in that it comprises the following steps:

- the said system is supplied (27) with a first search window (41; 51; 61) cut from the said digital image and containing a first portion of an apparent contour (45; 55; 65) of the said object and a second search window (42; 52; 62) cut from the said digital image and containing a second portion of an apparent contour (46; 56; 66) of the said object;
- the said system is supplied (28) with a first information element defining the geometrical nature of the said contour portion contained in the said first search window (41; 51; 61) and a second information element defining the geometrical nature of the said contour portion contained in the said second search window (42; 52; 62);
- for each of the said search windows, the said system automatically extracts (211), on the basis of the pixels contained in the said window, a theoretical contour portion which is mathematically the most probable and of a geometrical nature corresponding to the said contour information element supplied to the said system for the corresponding window;
- the said system finally computes (212) the distance separating the said first computed contour portion from the said second computed contour portion.

**2.** Method according to Claim 1, characterised in that it comprises a preliminary step for mathematical transformation (22) of the said digital image, the said digital image undergoing:

- on the one hand, a first and a second mathematical transformation corresponding to the application of an operator of a first derivative with respect to a horizontal axis and a vertical axis, respectively, the said first and second transformations supplying two first derivatives of the digital image with respect to the said horizontal axis and to the said vertical axis, respectively, and
- on the other hand, a third mathematical transformation corresponding to the application of a two-dimensional Laplacian operator, the said third transformation supplying a second derivative of the digital image.

**3.** Method according to Claim 2, characterised in that the said second derivative of the said digital image is displayed (25) to form a mask to assist the user in supplying the said search windows (41, 42; 51, 52; 61, 62) and the said corresponding contour information elements to the system.

**4.** Method according to any one of Claims 1 to 3, characterised in that the said geometrical nature of a computed contour portion belongs to the group comprising:

- circles;
- corners;
- straight portions.

**5.** Method according to any one of Claims 1 to 4, characterised in that the said step for supplying (27) the said system with two search windows is followed, for each of the said windows, by the two following steps:

- determination (29) of an amplitude level threshold of the pixels contained in the said window (41, 42; 51, 52; 61, 62);
- extraction (210) of pixels from the apparent contour portion, the said extraction step (210) consisting in elimination of the pixels for which the amplitude level is below the said threshold and in retaining the pixels for which the amplitude level is above the said threshold, the said retained pixels making up the said apparent pixels of a contour portion.

**6.** Method according to Claim 5, characterised in that the said amplitude level of a pixel is defined as the value associated with the said pixel in the second derivative of the digital image.

**7.** Method according to Claim 6, characterised in that the said amplitude level of a pixel is defined as the sum of the absolute values of the values associated with the said pixel in the two first derivatives of the image.

**8.** Method according to Claim 5, characterised in that the said amplitude level of a pixel is defined as the square root of the sum of the squares of the values associated with the said pixel in the two first derivatives of the image.

**9.** Method according to any one of Claims 5 to 8, characterised in that the said step for extraction (210) of pixels from the apparent contour portion is performed only on certain rows and certain columns of the said digital image which has been subjected to at least one of the said mathematical transformations, the pixels extracted from the apparent contour portion making up a sampled contour portion.

**10.** Method according to Claim 5, characterised in that the said steps for determination (29) of a threshold and for extraction (210) of pixels from the apparent contour portion are performed:

- on the one hand, on certain rows of pixels of the first derivative with respect to the horizontal axis of the digital image, the amplitude level of a pixel then being defined as the value associated with the said pixel in the said first derivative with respect to the horizontal axis of the digital image, first pixels of the apparent contour portion being extracted;
- on the other hand, on certain columns of pixels of the second derivative of the first derivative with respect to the vertical axis of the digital image, the amplitude level of a pixel then being defined as the value associated with the said pixel in the first derivative with respect to the vertical axis of the digital image, second pixels of the apparent contour portion being extracted,

the said first and second pixels extracted from the apparent contour portion together making up a sampled apparent contour portion.

**11.** Method according to either of Claims 9 and 10, characterised in that the said image rows and the said image columns are essentially equidistant.

**12.** Method according to any one of Claims 1 to 11, characterised in that the said step (211) for extraction of a theoretical contour portion implements a Hough transform.

**13.** Method according to any one of Claims 1 to 12, characterised in that the said distance separating two computed contour portions belongs to the group comprising:

- the shortest distance between a characteristic point (47; 57) of the said first computed contour portion and a characteristic point (48; 58) of the said second computed contour portion;
- the shortest distance between a characteristic point (67) of the said first computed contour portion and a characteristic straight line (69) of the said second computed contour portion;

**14.** Method according to Claim 3, characterised in that the said characteristic point is the centre (47) of a circle or the point (48; 57, 58; 67) of intersection of the two straight lines each including one of the two half lines (49, 410; 59, 510, 511, 512; 610, 611) forming a corner.

**15.** Method for verifying the signature of an object to be checked represented on a working digital image (31; 43; 53;

63), the said signature being compared with an original signature created with the aid of a method according to any one of Claims 1 to 14,
characterised in that, on the one hand, the said method for creation of the said original signature comprises a supplementary step (26) for localisation, by the said system, of the position of a typical object in a reference digital image,
and in that, on the other hand, the said verification method comprises the following steps:

- the said system localises (26) the position of the said object to be checked in the said working digital image and computes the offset with respect to the said position of the said typical object in the said reference digital image,
- the said system automatically shifts the said search windows (41, 42; 51, 52; 61, 62) such that they contain contour portions of the said object to be checked of the same geometrical natures as those supplied to the said system during the said creation of the original signature,
- in two steps identical to those in the said process for creation of the original signature, the said system extracts a contour portion for each of the said search windows and computes the distance separating the said theoretical contour portions,
- the said system finally compares the said distance corresponding to the signature of the object to be checked with the said distance corresponding to the original signature, the said comparison making it possible to assess the quality of the said object to be checked.

**16.** Method according to Claim 15, characterised in that the said step (26) for localisation of the position of an object in a digital image comprises:

- supplying the system with at least one localisation window cut from the said digital image and containing at least one characteristic portion of an apparent contour of the said object;
- determination, for each localisation window, of at least one information element with regard to the position of the said characteristic portion of the apparent contour of the said object in the said localisation window.

**17.** Method according to Claim 16, characterised in that the system is supplied with at least one vertical localisation window and/or at least one horizontal localisation window,
and in that the system determines at least one information element with regard to the vertical position in the said vertical localisation window and/or at least one information element with regard to the horizontal position in the said horizontal localisation window, each of the said information elements with regard to vertical position:

* identifying a screen row ($l_n$) in the said vertical localisation window (31) corresponding to one vertical end of the said characteristic portion of the apparent contour of the said object (32), and
* specifying at what edge (33) of the said vertical localisation window (31) the said identification of the said screen row ($l_n$) has to start;

each of the said information elements with regard to horizontal position:

* indicating, for at least two rows, a distance ($d_1$ to $d_m$) between, on the one hand, a lateral edge (34) of the said horizontal localisation window (35) containing a contour portion and, on the other hand, the nearest part of the said characteristic portion of the contour of the object (32), the said distances ($d_1$ to $d_m$) together giving an information element with regard to the shape of the said characteristic portion of the contour, and
* specifying with respect to which edge (34) of the said horizontal localisation window (35) the said distances have been computed.

**18.** Method according to Claim 16, characterised in that the said supply of at least one localisation window to the system is followed by, for each localisation window, a step for extraction of pixels from the contour portion of the object, comprising:

- detecting a first pixel of the contour portion of the object by successively analysing the pixels of a straight line portion of a search path,
- detecting a second pixel of a contour portion of an object by successively analysing, in accordance with a predetermined direction of rotation, the pixels of a first circular portion of the said search path, the said first circular portion corresponding to a part of the perimeter of a circle having a radius equal to a predetermined radius and centred on the said first pixel of the contour portion of the object,

- detecting another pixel of a contour portion of an object by successively analysing, starting from the pixel of a contour portion of the object preceding the preceding pixel of a contour portion of the object and in accordance with the said predetermined direction of rotation, the pixels of a new circular portion of the said search path, the said new circular portion corresponding to a part of the perimeter of a circle having a radius equal to the said predetermined radius and centred on the preceding pixel of a contour portion of the object,

the said detection of another pixel of a contour portion of the object being reiterated:

- either until the distance between the said other pixel of a contour portion of the object and the said first pixel of the contour of the object is less than the length of the said predetermined radius,
- or until the said other pixel of a contour portion of the object is located outside the said localisation window,

and in that, for each window, the system determines, from the said pixels of a contour portion of the object, at least one information element with regard to the position of the said characteristic portion of a contour of the object, the said information element with regard to position belonging to the group comprising:

* information elements with regard to horizontal position,
* information elements with regard to vertical position,
* information elements with regard to angular orientation.

**19.** Method according to Claim 18, characterised in that the said step for extraction of pixels from a contour portion of the object is followed by a step for obtaining a predetermined number N of equidistant working pixels from the said pixels of a contour portion of the object, the said step for obtaining a predetermined number N of equidistant working pixels comprising:

- construction of a polygon by connecting the said pixels of a contour portion of the object;
- computing the perimeter L of the said polygon;
- computing the distance D between two successive working pixels such that the said working pixels are essentially equidistant:

$$D = L/N;$$

- generating the said equidistant working pixels by linear interpolation between the said pixels of a contour portion of the object, the said equidistant working pixels defining a working contour, the distance D between two equidistant working pixels being defined along said working contour.

**20.** Method according to either of Claims 18 and 19, characterised in that the said localisation window contains the entire contour of the said object, in that the said information element with regard to angular position is defined as the angle contained between the horizontal axis of the image and the main axis of the said object, the said main axis passing through the centre of the said object, and in that the said information elements with regard to horizontal and vertical position correspond to the horizontal and vertical coordinates of the centre of the said object.

**21.** Method according to Claim 20, characterised in that the said angle is computed in accordance with the following equation:

$$\theta = 1/2.ARCTG\frac{2.(\sum_{i=1}^{N} x_i.y_i - N.c_x.c_y)}{\sum_{i=1}^{N} x_i^2 - \sum_{i=1}^{N} y_i^2 - N.(c_x^2 - c_y^2)}$$

where $\theta$ is the said angle;

$(x_i, y_i)$ are the coordinates of the $i^{th}$ pixel of a contour of the object,

N is the number of pixels of a contour of the object,
($c_x$, $c_y$) are the coordinates of the said centre of the object computed in accordance with the following equations:

$$c_x = 1/N \sum_{i=1}^{N} x_i$$

$$c_y = 1/N \sum_{i=1}^{N} y_i$$

**22.** Method according to Claim 20, characterised in that the said angle is computed by defining the said main axis as the axis passing through the said centre of the object as well as through that pixel of a contour of the object which is furthest away from the said centre of the object, the coordinates (Cx, Cy) of the centre of the object being computed in accordance with the following equations:

$$c_x = 1/N \sum_{i=1}^{N} x_i$$

$$c_y = 1/N \sum_{i=1}^{N} y_i$$

**23.** Method according to Claim 19, characterised in that that segment of a contour portion of the object that connects the said pixel of a contour portion of the object to the following pixel of a contour portion of the object is associated with each of the said pixels of a contour portion of the object, each of the said segments being defined by its angular position with respect to the preceding segment,
and in that the said system computes the maximum value of a correlation function between, on the one hand, the angular positions of the segments of the contour portion of the object to be checked and, on the other hand, the angular positions of the segments of the contour position (sic) of the typical object, the said maximum value providing an information element with regard to offset, expressed as the number of segments, between a segment of the contour portion of the object to be checked and the corresponding segment of the contour portion of the typical object, the said information element with regard to offset allowing computation of :

- on the one hand, an information element with regard to translational offset between the position of the object to be checked and the position of the typical object in translation, the said information element with regard to offset being computed as the difference between the coordinates of a segment of the contour portion of the object to be checked and the coordinates of the corresponding segment of the contour portion of the typical object;
- on the other hand, an information element with regard to rotational offset between the position of an object to be checked and the position of the typical object, the said information element with regard to rotational offset being computed as the difference between the absolute angular position of a segment of a contour portion of the object to be checked and the absolute angular position of the corresponding segment of the contour portion of the typical object.

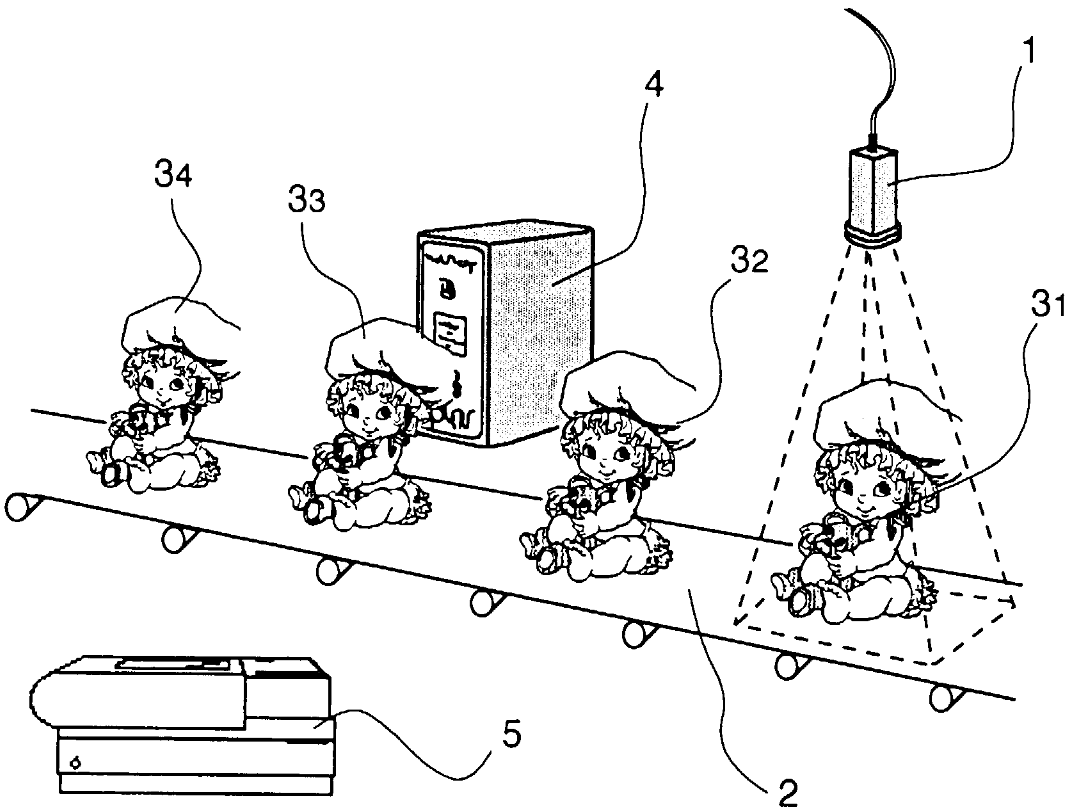


Fig. 1

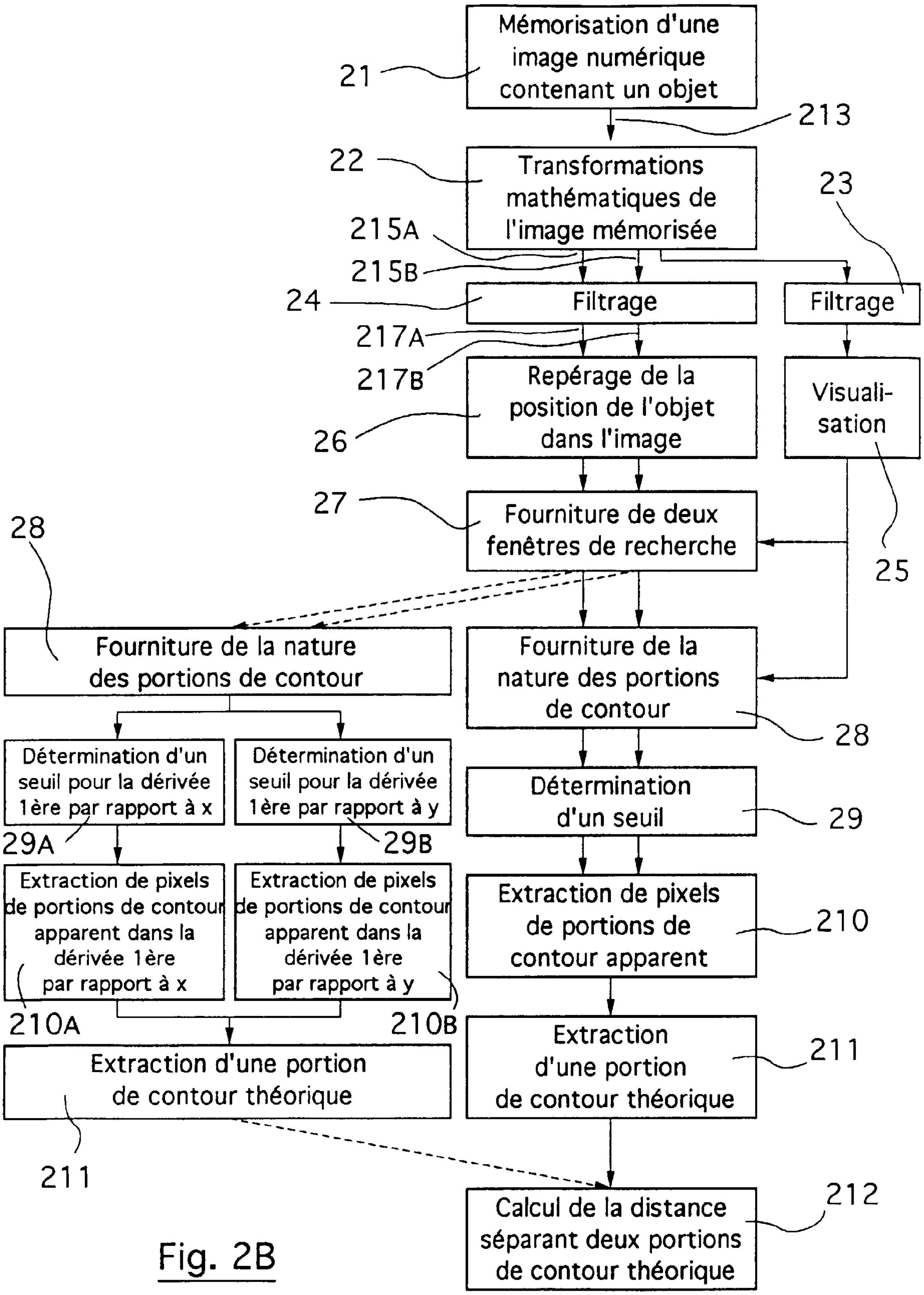
Mémorisation d'une image numérique contenant un objet
21
213
Transformations mathématiques de l'image mémorisée
22
23
215A
215B
24
Filtrage
Filtrage
217A
217B
Repérage de la position de l'objet dans l'image
Visualisation
26
27
Fourniture de deux fenêtres de recherche
25
28
Fourniture de la nature des portions de contour
Fourniture de la nature des portions de contour
28
Détermination d'un seuil pour la dérivée 1ère par rapport à x
Détermination d'un seuil pour la dérivée 1ère par rapport à y
Détermination d'un seuil
29
29A
29B
Extraction de pixels de portions de contour apparent dans la dérivée 1ère par rapport à x
Extraction de pixels de portions de contour apparent dans la dérivée 1ère par rapport à y
Extraction de pixels de portions de contour apparent
210
210A
210B
Extraction d'une portion de contour théorique
Extraction d'une portion de contour théorique
211
211
Calcul de la distance séparant deux portions de contour théorique
212

Fig. 2B

Fig. 2A

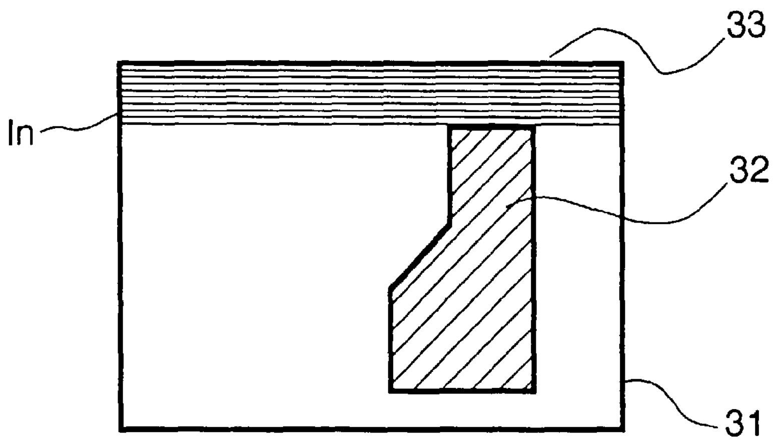


Fig. 3a

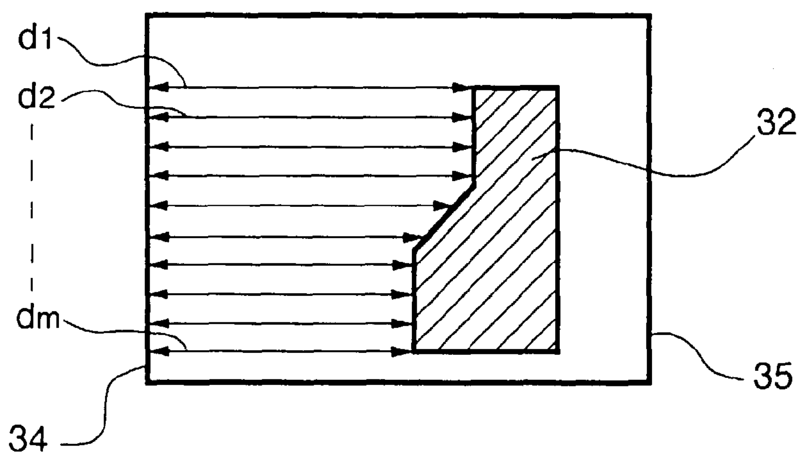


Fig. 3b

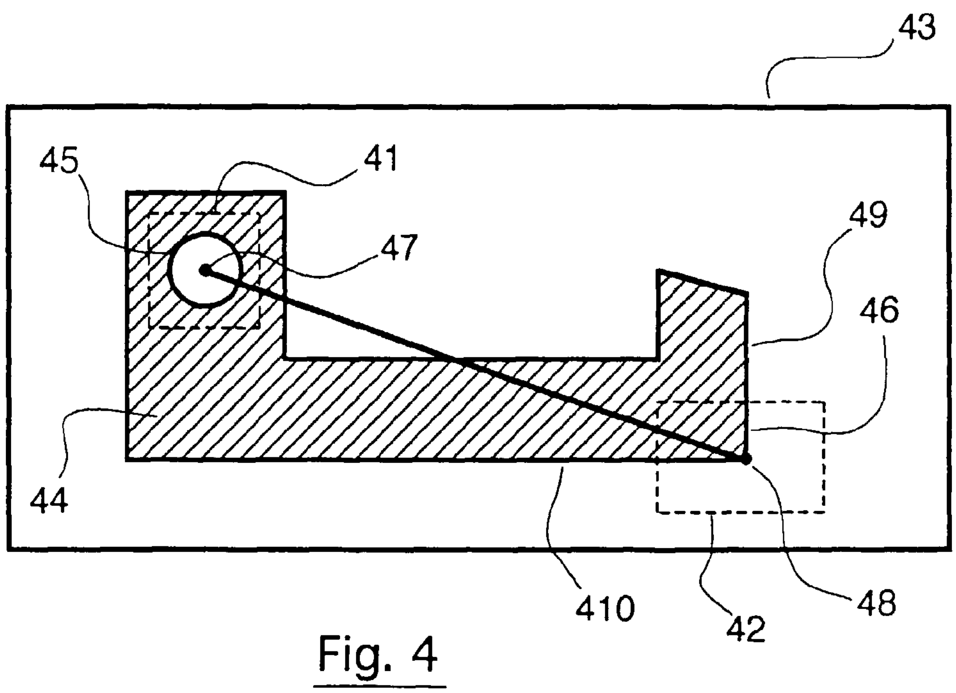


Fig. 4

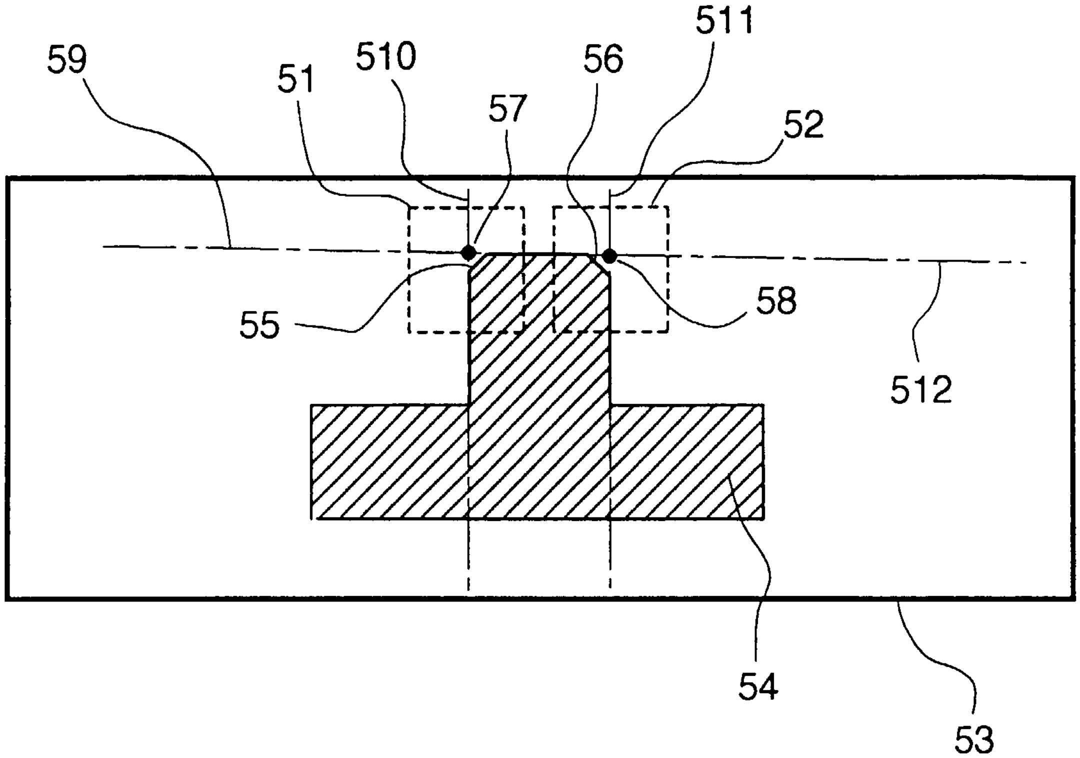
59
51
510
57
56
511
52
55
58
512
54
53

Fig. 5

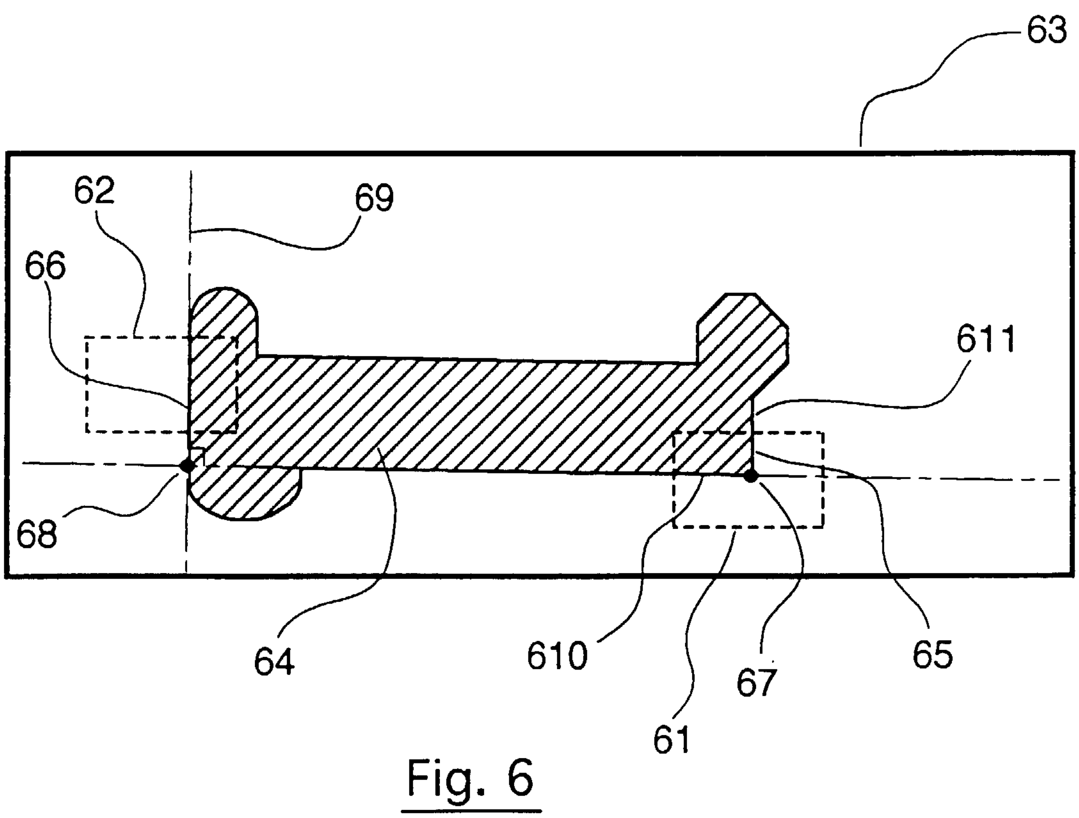
63
62
69
66
611
68
64
610
61
67
65

Fig. 6

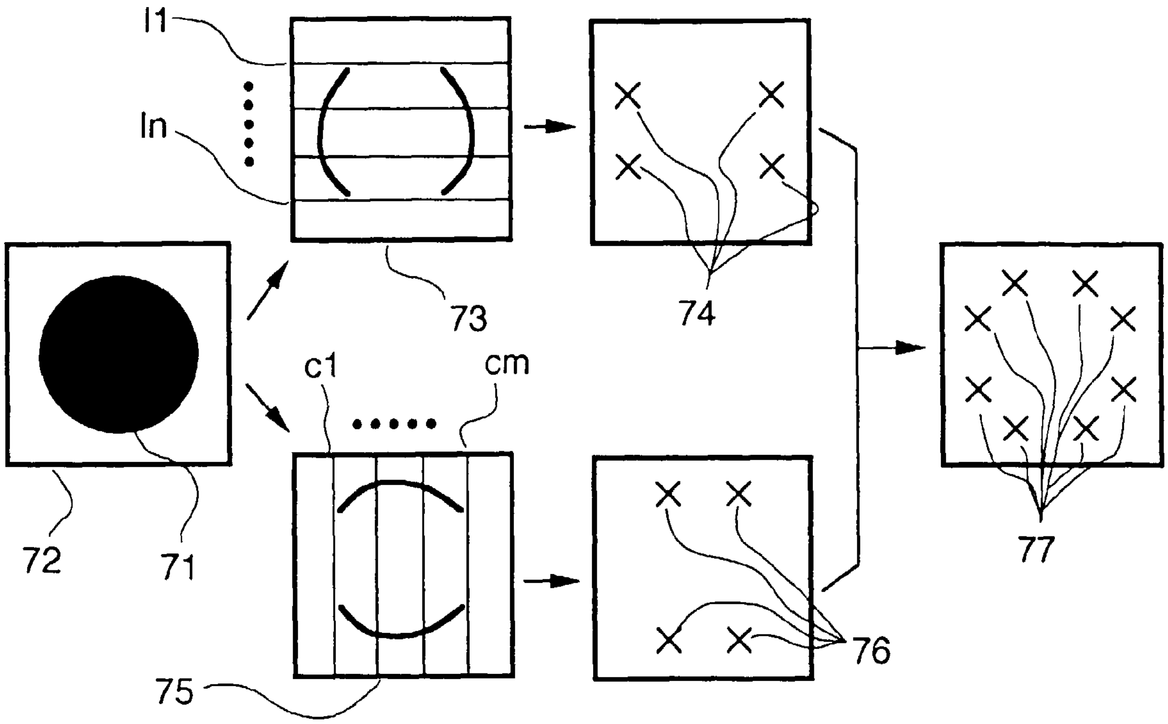
l1
ln
73
74
c1
cm
72
71
75
76
77

Fig. 7

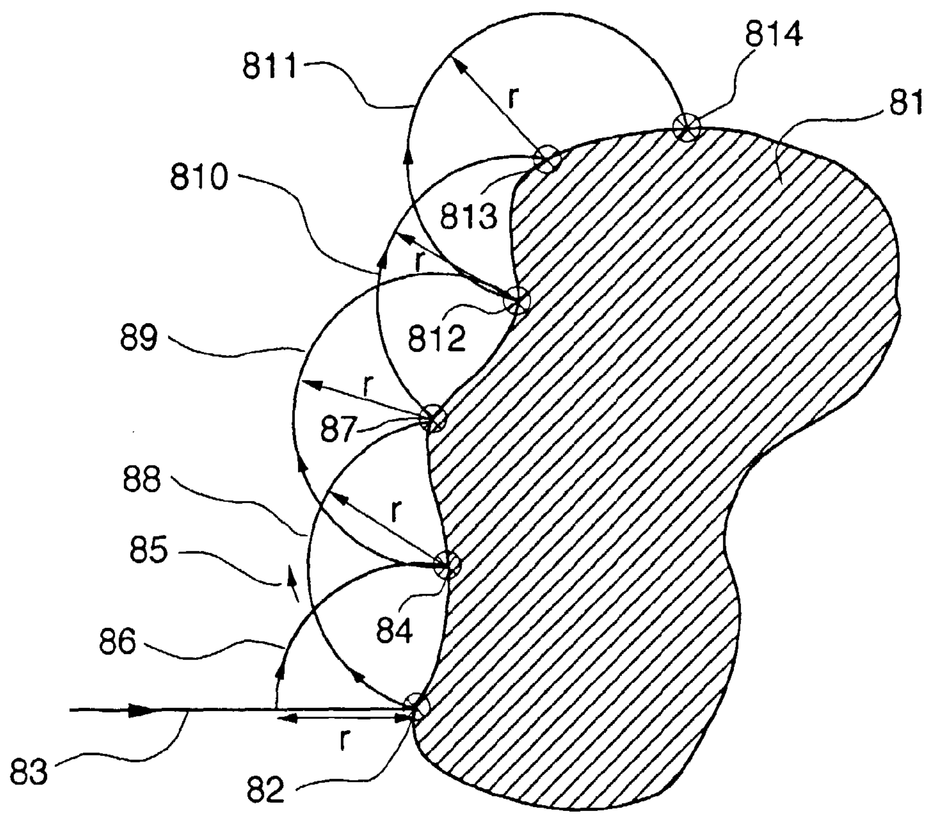
811
814
81
r
810
813
r
812
89
r
87
88
r
85
86
84
83
r
82

Fig. 8